# EUROPÄISCHE PATENTSCHRIFT

(11) **EP 2 154 436 B1**
(45) Veröffentlichungstag und Bekanntmachung des Hinweises auf die Patenterteilung: **27.05.2020**
(21) Anmeldenummer: 09010295.5
(22) Anmeldetag: 10.08.2009
(51) Int. Cl.: F24D 10/00, F24D 19/10

(54) **Verfahren und Vorrichtung zur Wärmenutzung**
Method and device for heat utilization
Procédé et dispositif pour l'utilisation de chaleur

(30) Priorität: 12.08.2008 DE 102008038617
(43) Veröffentlichungstag der Anmeldung: 17.02.2010
(73) Patentinhaber: Triesch, Frank, 04328 Leipzig (DE)
(72) Erfinder: Triesch, Frank, 04328 Leipzig (DE)

(56) Entgegenhaltungen:
- EP-A1- 1 455 140
- EP-A1- 1 475 571

## Beschreibung

Die vorliegende Erfindung betrifft ein Verfahren und eine Vorrichtung zur Wärmenutzung gemäß den Oberbegriffen der Ansprüche 1 und 6.

Im Folgenden wird zumeist auf mit Heizversorgern gekoppelte Warmwasserbereitungssysteme abgehoben, wobei die vorliegende Erfindung wesentlich allgemeiner verwendet werden kann, wie noch deutlich werden wird.

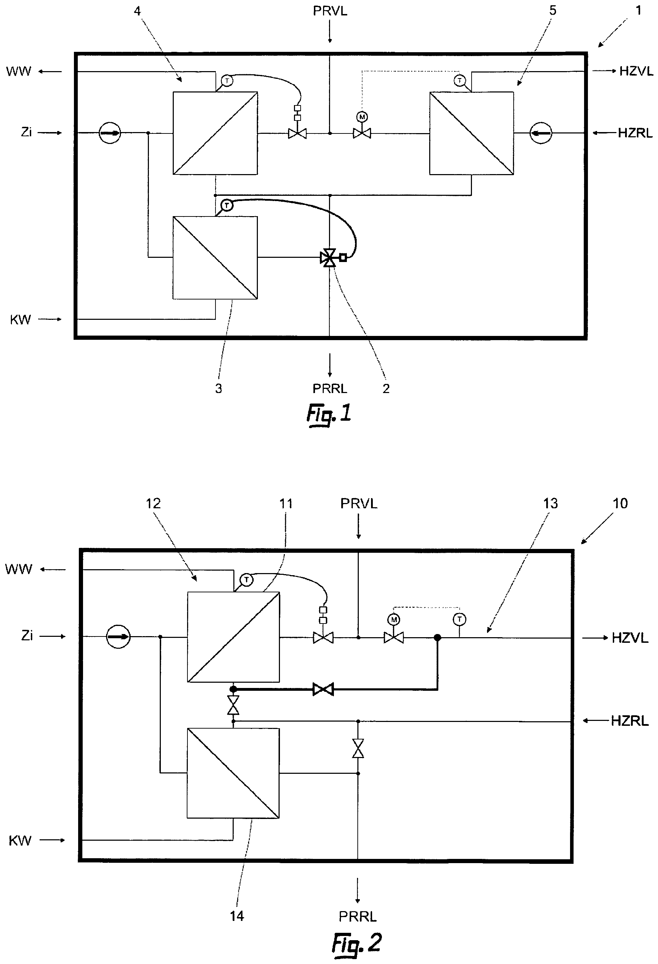

Es ist bekannt, in zentralen Warmwasserbereitungssystemen am Ein- oder Austritt des Wärmeübertragers ein Dreiwegeventil vorzusehen. So wurde bereits in Munser H., Fernwärmeversorgung, VEB Deutscher Verlag für Grundstoffindustrie, Leipzig, 2. überarbeitete Auflage, 1983, S. 272 [D1] die Schaltung einer Hausanschlussstation (HAST) 1 mit einem Dreiwege-Regelventil 2 mit Mischfunktion am Austritt des Vorwärmers 3 einer zweistufigen Warmwasserbereitung 4 mit Rücklaufauskühlung aus der Heizung 5 angegeben, was in Fig. 1 dargestellt ist. Die Aufgabe des Dreiwegeventils 2 bestand darin, die Temperatur des aus dem Vorwärmer 3 austretenden Warmwassers WW auf ca. 60 °C zu begrenzen. Dies war besonders dann erforderlich, wenn im Winter bei hohen Rücklauftemperaturen aus der Heizung und geringen Warmwasserzapfmengen die Warmwassertemperatur am Austritt des Vorwärmers über 60 °C steigen konnte. Diese Aufgabe wurde dadurch gelöst, dass bei steigender Temperatur der dritte Weg des Dreiwegeregelventils 2 einen Bypass zum Wärmeübertrager 3 öffnete und den Rücklauf aus der Heizung 5 zumindest zum Teil am Wärmeübertrager 3 vorbei leitete. Dieser Schaltung eigen war, dass bei der Mischung wärmeren Primärwassers aus dem Nachwärmer mit zumindest zeitweise kälterem Rücklaufwasser aus der Heizung die erzielbare Warmwassertemperatur aus dem Vorwärmer künstlich gesenkt und die Primärrücklauftemperatur und der Primärwasserverbrauch erhöht wurden.

Zur Reduzierung der Fernwärmerücklauftemperatur und -Durchsatzmenge in einer HAST 10 ist es ebenfalls bekannt, den Rücklauf aus der Nachwärmstufe 11 einer zweistufigen Warmwasserbereitung 12 in der Heizsaison stets der direkt an das Fernwärmesystem gekoppelten Heizung 13 zuzuführen (SP 41-101-95, Projektirowanije teplowych punktow, MINSTROI Rossii, Moskau, 1995, S. 14 [D2]), was in Fig. 2 dargestellt ist. Der Rücklauf aus der Heizung 13 wird seinerseits in der Vorwärmstufe 14 der Warmwasserbereitung 12 ausgekühlt. Da die Leistung der Nachwärmstufe 11 einer zweistufigen Warmwasserbereitung 12 anteilig durchaus 30 % und mehr betragen kann, besteht die Möglichkeit, die Heizung 13 mit dem Rücklauf aus der Nachwärmstufe 11 der zweistufigen Warmwasserbereitung 12 negativ zu beeinflussen. Die Gefahr des Überheizens besteht insbesondere bei vergleichsweise niedrigen Heizleistungen, oder in der Übergangszeit, oder bei Heizsystemen niedriger Vorlauftemperaturen. Die Vermischung von Rücklauf aus der Warmwasserbereitung 12 und Primärvorlauf der Heizung 13 reduziert insbesondere bei großen Temperaturunterschieden wie im Winter das Potential des Primärvorlaufs (Exergieverlust). Eine Unterheizung und größere Primärdurchsatzmengen können dann im Winter oder bei Heizsystemen hoher Vorlauftemperaturen die Folge sein.

Es ist für HAST 20 auch bekannt, ein Dreiwegeverteilventil 21 am Austritt eines in diesem Fall einstufigen Warmwasserbereiters 22 zu installieren (DE 196 42 179 A1), was in Fig. 3 dargestellt ist. Aufgabe dieses Dreiwegeregelventils 21 war es, die Warmwassertemperatur indirekt über die Fernwärmerücklauftemperatur zu regeln. Diese Aufgabe wurde dadurch gelöst, dass bei zu hoher Rücklauftemperatur, was ein Indiz für eine zu hohe Heizwasserdurchsatzmenge wäre, ein Teil des Rücklaufwassers über den dritten Weg des Dreiwegeverteilventils 21 dem Vorlauf wieder zugeführt und beigemischt wird. Eine konstante Primärdurchsatzmenge wurde so durch eine Bypassschaltung reduziert. Durch eine abgesenkte Vorlauftemperatur reduzierte sich automatisch auch die Warmwassertemperatur. Die Warmwassertemperatur war bei dieser Schaltung durch die indirekte Regelung jedoch gewissen Schwankungen unterworfen, und für einen Zirkulationsbetrieb mit wesentlich höheren Rücklauftemperaturen als bei der Warmwasserbereitung war sie nur bedingt geeignet. Die Rücklauftemperaturabsenkung aus der Heizung 23 durch eine zweistufige Warmwasserbereitung war in dieser Schaltung nicht vorgesehen.

Zum Schutz vor Verkalkung und zur zusätzlichen Rücklaufauskühlung aus der Heizung ist es für HAST 25 ebenfalls bekannt, dem Primärvorlauf für eine einstufige Warmwasserbereitung 26 den Rücklauf 27 aus der Heizung 28 vollständig zuzumischen (z.B. DE 20 2006 018 246 U1, Anlage 1 [D3]), was in Fig. 4 dargestellt ist. Damit wird zwar das Temperaturniveau des Primärvorlaufes meist in für die Verkalkung des Wärmeübertragers 29 ungefährliche Bereiche gesenkt. Auch besteht die Möglichkeit, im Winter bei ausreichend hohen Rücklauftemperaturen aus der Heizung damit die Warmwasserzirkulation zu betreiben.

Gleichzeitig kann bei Rücklauftemperaturen wesentlich über 60 °C einer Verkalkung sogar Vorschub geleistet werden bis hin zu Verbrühungsgefahr, ohne dafür Lösungen anzubieten. In der gesamten übrigen Zeit aber wird der Heizungsrücklauf 27 auf ein für die Warmwasserbereitung 26 erforderliches Niveau von zumindest 61 °C, für die Abtötung von Legionellen sogar auf mindestens 71 °C angehoben, unabhängig von der Ausgangstemperatur, die durchaus auch weit unter 40 °C betragen kann. Damit wird mit dieser Schaltung die Primärrücklauftemperatur überwiegend auf ca. 55 °C angehoben. Nur bei sehr großen Warmwasserzapfungen entsteht eine weitere Rücklauftemperaturabsenkung bis auf ca. 50 °C.

Aus diesem Grund ist es für HAST 30 ebenfalls bekannt, ein Dreiwegeverteilventil 31 im Eintritt des Heizungsrücklaufes in den Vorwärmer 32 einer zweistufigen Warmwasserbereitung 33 mit Rücklaufauskühlung aus der Heizung 34 einzubinden (DE 102 54 889 A1), was in Fig. 5 dargestellt ist. Aufgabe des Dreiwegeregelventils 31 ist es hier, den Heizungsrücklauf nur bei ausreichender Rückkühlung im Vorwärmer 32 zu nutzen. Dafür sind als Solltemperatur 30 °C einzustellen. Entgegen dem eigentlichen Ziel der zweistufigen Warmwasserbereitung - der Rücklauftemperaturabsenkung - wird bei reiner Zirkulation ohne Warmwasserbereitung die Primärrücklauftemperatur durch ein Mischen der Rückläufe aus der Heizung 34 und der Zirkulation Zi zumindest in der Übergangszeit meist angehoben. Der Nachteil auch dieser Schaltung 30 ist, dass bei hohen Rücklauftemperaturen aus der Heizung 34 für die Warmwasserzirkulation trotzdem Primärwasser benötigt wird, da der Heizungsrücklauf durch den Vorwärmer 32, die Zirkulation Zi jedoch durch den Nachwärmer 35 strömen.

Ebenfalls bekannt ist für HAST 40, ein Dreiwegeverteilventil 41 am Austritt eines in diesem Fall einstufigen Warmwasserbereiters 42 einzubinden (Kunst B., Domestic Hot Water Tanks Charged by High Efficient Heating Systems, EuroHeat&Power English Edition, Vol. 4, IV/2007, S. 31 [D4]), was in Fig. 6 dargestellt ist. Sobald die Warmwasserbereitung 42 in Betrieb ist und die Heizung 43 dies zulässt, wird der Rücklauf aus der Warmwasserbereitung 42 über das Dreiwegeumschaltventil 41 dem Vorlauf der Heizung 43 in Serie zugeführt und in dieser weiter ausgekühlt. Das Regelventil 44 der Heizung 43 ist in dieser Zeit geschlossen und es herrscht Warmwasservorrangbetrieb. Werden die Grenzen der Heizung 43 mit dem Rücklauf der Warmwasserbereitung 42 überschritten (+/- 5 Kelvin), wird jedoch weiterhin der Rücklauf aus der Warmwasserbereitung 42 über das Dreiwegeumschaltventil 41 an der Heizung 43 parallel vorbei geleitet. Diese Schaltung 40 wurde erforderlich, weil bei einer einstufigen Warmwasserbereitung mit einer Heizspirale in einem Warmwasserspeicher bauartbedingt mit mindestens 60 °C meist höhere Rücklauftemperaturen auftreten, als aus der Heizung, dies insbesondere bei Niedertemperaturheizsystemen. Der Nachteil dieser Schaltung 40 ist, dass ein elektrisch angetriebenes Dreiwegeumschaltventil 41 benötigt wird, welches durch eine elektronische Regelung angesteuert werden soll, in der durch komplizierte Algorithmen ermittelt werden muss, ob der Rücklauf aus der Warmwasserbereitung 42 die Heizung 43 negativ beeinflussen kann, und zwar nicht nur in der Temperatur, sondern auch in der Durchsatzmenge. So könnte es zum Beispiel bei sehr hohen Rücklauftemperaturen und/oder Durchsatzmengen aus der Warmwasserbereitung 42 in der Übergangszeit zu einer Überheizung kommen. Nicht genutzt werden in dieser Schaltung die naturgemäß niedrigen Kaltwassertemperaturen zur weiteren Auskühlung des stets wärmeren Heizungsrücklaufes.

Die Druckschrift EP 1 475 571 A1 stellt ein Verfahren und eine Vorrichtung zur Wärmenutzung gemäß dem Oberbegriff des Anspruchs 1 und 6 vor, wobei eine Hausanschlussstation mit einem an ein Fernwärmenetz angeschlossenen Haus mit Heizwärme und mit Warmwasser versorgt werden kann.

Der vorliegenden Erfindung liegt die Aufgabe zugrunde, ein effizientes, einfaches, universell anwendbares, preiswertes und zuverlässiges System zur Wärmenutzung, insbesondere ein Warmwasserbereitungs- und Heizsystem zu entwickeln, welches insbesondere in allen Betriebsfällen eine minimal mögliche Rücklauftemperatur bewirkt. Insbesondere sollen dabei auf einfache Weise die Nachteile jeder einzelnen Schaltung überwunden werden können.

Diese Aufgabe wird gelöst mit dem Verfahren nach Anspruch 1 und der Vorrichtung nach Anspruch 6. Vorteilhafte Weiterbildungen sind in den jeweils abhängigen Unteransprüchen angegeben.

Das erfindungsgemäße Verfahren zur Wärmenutzung zeichnet sich insbesondere bei der Heizversorgung und Warmwasserbereitung dadurch aus, dass in einem ersten Betriebszustand der primärseitige Rücklauf der Warmwasserbereitung oberhalb oder bei einer Soll-Temperatur des primärseitigen Rücklaufs der Warmwasserbereitung oder unterhalb oder bei der Soll-Temperatur des primärseitigen Rücklaufs der Heizversorgung oder oberhalb oder bei einer Soll-Temperaturdifferenz zwischen dem primärseitigen Rücklauf der Warmwasserbereitung und dem primärseitigen Rücklauf der Heizversorgung zumindest teilweise so in die Heizversorgung eingespeist wird, dass der primärseitige Rücklauf der Warmwasserbereitung in der Heizversorgung zumindest teilweise weiter ausgekühlt wird, und dass in einem zweiten Betriebszustand der primärseitige Rücklauf der Heizversorgung unterhalb oder bei der Soll-Temperatur des primärseitigen Rücklaufs der Warmwasserbereitung oder oberhalb oder bei der Soll-Temperatur des primärseitigen Rücklaufs der Heizversorgung oder unterhalb oder bei der Soll-Temperaturdifferenz zwischen dem primärseitigen Rücklauf der Warmwasserbereitung und dem primärseitigen Rücklauf der Heizversorgung zumindest teilweise so in die Warmwasserbereitung eingespeist wird, dass der primärseitige Rücklauf der Heizversorgung in der Warmwasserbereitung zumindest teilweise weiter ausgekühlt wird. Dabei handelt es sich bei der Warmwasserbereitung bevorzugt um eine solche nach Durchlaufprinzip und insbesondere soll nicht nur die Warmwasserbereitung, sondern auch die Heizversorgung mit Hilfe jeweils mindestens eines Wärmeübertragers primärseitig mit einer gemeinsamen Wärmeversorgung gekoppelt sein.

Die erfindungsgemäße Vorrichtung insbesondere zur Heizversorgung und Warmwasserbereitung, die insbesondere nach dem erfmdungsgemäßen Verfahren zur Wärmenutzung betrieben wird, weist einen Heizversorger und einen insbesondere im Durchflussprinzip arbeitenden Warmwasserbereiter auf, wobei insbesondere sowohl der Heizversorger als auch der Warmwasserbereiter jeweils mindestens einen Wärmeübertrager aufweisen, die primärseitig mit einem Wärmeversorger verbunden sind. Weiterhin ist der Warmwasserbereiter mit dem Heizversorger so gekoppelt, dass der primärseitige Rücklauf des Warmwasserbereiters oberhalb oder bei einer Soll-Temperatur des primärseitigen Rücklaufs des Warmwasserbereiters oder unterhalb oder bei der Soll-Temperatur des primärseitigen Rücklaufs des Heizversorgers oder oberhalb oder bei einer Soll-Temperaturdifferenz zwischen dem primärseitigen Rücklauf des Warmwasserbereiters und dem primärseitigen Rücklauf des Heizversorgers zumindest teilweise so in den Heizversorger einspeisbar ist, dass der primärseitige Rücklauf des Warmwasserbereiters in dem Heizversorger weiter ausgekühlt wird, und dass der primärseitige Rücklauf des Heizversorgers unterhalb oder bei der Soll-Temperatur des primärseitigen Rücklaufs des Warmwasserbereiters oder oberhalb oder bei der Soll-Temperatur des primärseitigen Rücklaufs der Heizversorgers oder unterhalb oder bei der Soll-Temperaturdifferenz zwischen dem primärseitigen Rücklauf des Warmwasserbereiters und dem primärseitigen Rücklauf des Heizversorgers zumindest teilweise so in den Warmwasserbereiter einspeisbar ist, dass der primärseitige Rücklauf des Heizversorgers in dem Warmwasserbereiter weiter ausgekühlt wird.

Die mit der Erfindung erzielbaren Vorteile bestehen insbesondere darin, dass sowohl bei der Warmwasserbereitung als auch bei der Zirkulation und bei parallelem Heizbetrieb in jeder Jahreszeit stets die niedrigste mögliche Rücklauftemperatur in das Fernwärmenetz abgegeben wird mit der Folge eines stets minimal erforderlichen Fernwärmemengenstromes.

Im Folgenden wird die Erfindung immer im Zusammenhang der mit der Heizversorgung gekoppelten Warmwasserbereitung erläutert.

In einer vorteilhaften Ausgestaltung beträgt die Soll-Temperatur ≤ 50 °C, bevorzugt ≤ 45°C und insbesondere ≤ 40 °C und die Soll-Temperaturdifferenz beträgt ≤ 10 K, bevorzugt ≤ 5 K, insbesondere nahe 0 K, d.h. 0 K ± ≤ 0,5 K. Bei diesen Werten ist die Energieeffizienz bezüglich der verwendeten Wärmeversorgung besonders gut.

In einer bevorzugten Ausführungsform erfolgt die Heizversorgung zumindest zweistufig mit mindestens einer Vor- und einer Nachwärmung, wobei der primärseitige Rücklauf der Warmwasserbereitung zumindest teilweise dem primärseitigen Vorlauf der Vorwärmung der Heizversorgung in dem ersten Betriebszustand zugeführt wird. Alternativ oder zusätzlich erfolgt auch die Warmwasserbereitung zweistufig mit einer Vor- und einer Nachwärmung, wobei in dem zweiten Betriebszustand der primärseitige Rücklauf der Heizversorgung dem primärseitigen Vorlauf der Vorwärmung der Warmwasserbereitung zumindest teilweise zugeführt wird. Durch die mehrstufige Ausbildung kann die Energieeffizienz noch erhöht werden.

Besonders bevorzugt sind der primärseitige Rücklauf des Warmwasserbereiters und der primärseitige Rücklauf des Heizversorgers mit einem Primärrücklauf des Wärmeversorgers über ein gemeinsames Dreiwegeventil verbunden, wobei das Dreiwegeventil eingerichtet ist, den primärseitigen Rücklauf des Warmwasserbereiters gegenüber dem Primärrücklauf oberhalb oder bei der Soll-Temperatur des primärseitigen Rücklaufs des Warmwasserbereiters zumindest teilweise zu sperren und unterhalb oder bei der Soll-Temperatur des primärseitigen Rücklaufs des Warmwasserbereiters den primärseitigen Rücklauf des Heizversorgers gegenüber dem Primärrücklauf zumindest teilweise zu sperren. Dabei ist zweckmäßig der primärseitige Vorlauf des Vorwärmers des Warmwasserbereiters über ein in Richtung des Primärrücklaufs des Wärmeversorgers sperrendes Rücksperrventil mit dem primärseitigen Rücklauf des Heizversorgers und dem Dreiwegeventil verbunden und der primärseitige Vorlauf des Heizversorgers über ein in Richtung des Primärrücklaufs des Wärmeversorgers sperrendes Rücksperrventil mit dem Primärrücklauf des Warmwasserbereiters und dem Dreiwegeventil verbunden.

In einer alternativen bevorzugten Ausgestaltung zum Dreiwegeventil sind der primärseitige Rücklauf des Warmwasserbereiters und der primärseitige Rücklauf des Heizversorgers mit dem Primärrücklauf des Wärmeversorgers über eine gemeinsame thermisch Weiche verbunden, wobei die thermische Weiche eingerichtet ist, den primärseitigen Rücklauf des Warmwasserbereiters oberhalb oder bei der Soll-Temperaturdifferenz zwischen dem primärseitigen Rücklauf des Warmwasserbereiters und dem primärseitigen Rücklauf des Heizversorgers zumindest teilweise mit dem primärseitigen Vorlauf des Heizversorgers zu verbinden und den primärseitigen Rücklauf des Heizversorgers unterhalb oder bei der Soll-Temperaturdifferenz zwischen dem primärseitigen Rücklauf des Warmwasserbereiters und dem primärseitigen Rücklauf des Heizversorgers zumindest teilweise mit dem primärseitigen Vorlauf des Warmwasserbereiters zu verbinden.

Vorteilhaft weist die thermische Weiche vier Anschlüsse auf, wobei ein erster Anschluss mit dem primärseitigen Rücklauf des Warmwasserbereiters, ein zweiter Anschluss mit dem primärseitigen Rücklauf des Heizversorgers, ein dritter mit dem Primärrücklauf und ein vierter sowohl mit dem primärseitigen Vorlauf des Heizversorgers als auch mit dem primärseitigen Vorlauf des Warmwasserbereiters verbunden ist, wobei zwischen dem vierten Anschluss und dem primärseitigen Vorlauf des Heizversorgers ein in Richtung der thermischen Weiche sperrendes Rücksperrventil und zwischen dem vierten Anschluss und dem primärseitigen Vorlauf des Warmwasserbereiters ein in Richtung der thermischen Weiche sperrendes Rücksperrventil vorgesehen sind.

Die thermische Weiche soll dabei vorteilhaft die Temperatur des primärseitigen Rücklaufs des Warmwasserbereiters oder des primärseitigen Rücklaufs insbesondere des Heizversorgers, oder die Temperaturdifferenz zwischen dem primärseitigen Rücklauf des Warmwasserbereiters und dem primärseitigen Rücklauf des Heizversorgers elektronisch oder thermisch bestimmen. So lässt sich die thermische Weiche besonders einfach und sicher arbeitend realisieren.

Anstelle der Soll-Temperaturdifferenz kann für die thermische Weiche alternativ auch eine Soll-Temperatur als Schaltpunkt genutzt werden, genau so wie für das Dreiwegeventil die Soll-Temperaturdifferenz anstelle einer Soll-Temperatur als Schaltpunkt genutzt werden kann.

In einer besonders bevorzugten Ausgestaltung ist der Warmwasserbereiter zumindest zweistufig ausgebildet und weist eine oder mehrere Stufen zur Vor- und eine oder mehrere Stufen zur Nachwärmung auf und/oder der Heizversorger ist zumindest zweistufig ausgebildet und weist zumindest eine Stufe zur Vor- und zumindest eine Stufe zur Nachwärmung auf.

Zweckmäßig ist zusätzlich oder alternativ auch der Warmwasserbereiter zumindest zweistufig ausgebildet und weist zumindest einen Mehrmedien-, bevorzugt zumindest einen Viermedien-Wärmeübertrager zur Vor- und Nachwärmung auf und/oder der Heizversorger ist zumindest zweistufig ausgebildet und weist zumindest einen Mehrmedien-, bevorzugt zumindest einen Dreimedien-Wärmeübertrager zur Vor- und Nachwärmung auf. D.h. dass alle Möglichkeiten miteinander kombinierbar sind, um eine bestmögliche Anpassung an die jeweiligen Gegebenheiten zu ermöglichen.

Insbesondere für Heizversorger, die ein Fernwärmemedium direkt verwerten, aber auch für mit Wärmeübertragern arbeitende Heizversorger ist es vorteilhaft, wenn der primärseitige Rücklauf des Warmwasserbereiters mit dem primärseitigen Vorlauf des Heizversorgers über ein öffenbares Sperrventil mit beliebigem Antrieb verbunden ist. Dann lässt sich dieser Weg nämlich außerhalb der Heizsaison sperren.

Insbesondere in diesem Zusammenhang aber auch alternativ ist es günstig, wenn der primärseitige Rücklauf des Warmwasserbereiters mit dem Primärrücklauf über einen Bypass bezüglich des Dreiwegeventils bzw. der thermischen Weiche verbunden ist, wobei der Bypass über ein Sperrventil mit beliebigem Antrieb absperrbar ist. Dann lässt sich nämlich außerhalb der Heizsaison primärseitiges Rücklaufmedium des Warmwasserbereiters unter Umgehung des Heizversorgers direkt dem Primärrücklauf zuführen.

Das erfindungsgemäße Verfahren zeichnet sich also dadurch aus, dass oberhalb oder bei einer bestimmten Rücklauftemperatur aus der Warmwasserbereitung oder bezüglich einer Soll-Temperaturdifferenz beispielsweise bei einer höheren Rücklauftemperatur aus der Warmwasserbereitung als aus der Heizung, also zum Beispiel bei Zirkulationsbetrieb, der Rücklauf aus der Warmwasserbereitung zumindest teilweise seriell durch die Heizung geleitet wird und dort weiter ausgekühlt wird, wobei der Heizungsrücklauf an der Warmwasserbereitung zumindest teilweise vorbei geleitet wird. Liegt jedoch die Rücklauftemperatur aus der Warmwasserbereitung unter oder bei der bestimmten Rücklauftemperatur oder liegt die Temperaturdifferenz unter oder bei der bestimmten Soll-Temperaturdifferenz, liegt beispielsweise die Austrittstemperatur aus der Warmwasserbereitung unter der Rücklauftemperatur aus der Heizung, so wird der Rücklauf aus der Heizung zumindest teilweise durch die Warmwasserbereitung geleitet und dort maximal ausgekühlt. In beiden Fällen werden durch wechselnde zumindest teilweise Reihenschaltungen von Heizung und Warmwasserbereitung die jeweils minimal mögliche Rücklauftemperatur und gleichzeitig der minimal mögliche Primärvolumenstrom erzielt.

Die erfindungsgemäße Vorrichtung weist ein Regel- oder Umschaltventil auf, das den Warmwasserbereitungsrücklauf entweder mit der Heizung und/oder mit dem Primärrücklauf und den Heizungsrücklauf entweder mit der Warmwasserbereitung und/oder mit dem Primärrücklauf kommunizierend koppeln kann.

Eine negative Beeinflussung der Heizung mit dem Rücklauf aus der Warmwasserbereitung ist weitestgehend ausgeschlossen, da es sich im wesentlichen nur um den Rücklauf aus der Warmwasserzirkulation handeln kann, dessen Menge sehr gering ist und dessen Temperatur nur leicht oberhalb der Temperatur des Zirkulationsrücklaufes von 55 °C liegt, also beispielsweise bei 57 °C. Dies sollen drei Beispiele des Parallelbetriebs von Heizung und Zirkulation in der Übergangszeit verdeutlichen, die den größten Teil der Heizsaison in Deutschland ausmacht.

Dabei wird angenommen, dass die Leistung der Warmwasserbereitung im Durchflussprinzip der der Heizung im Auslegungspunkt entspricht, und die Zirkulationsleistung ihrerseits ca. 10 % der Warmwasserbereitungsleistung, und dass an den Wärmeübertragern Temperaturdifferenzen von konstant 5 Kelvin (K) zwischen der Primär- und der Sekundärseite auftreten.

Es wird weiter angenommen, dass die minimale Vorlauftemperatur in einem Fernwärmenetz in der Übergangszeit konstant 80 °C beträgt, um unter allen Umständen die Warmwasserbereitung sicherstellen zu können. Bei einer Außentemperatur von 10 °C beträgt die erforderliche Vorlauftemperatur in einer Radiatorheizung (bei einer Auslegungstemperatur von 80/60 °C bei - 16 °C) ca. 38 °C, und die erforderliche Heizleistung beträgt ca. 24 % der Auslegungsleistung. Bei den meisten der bekannten Schaltungen wird der Rücklauf aus der Zirkulation mit dem Rücklauf aus der Heizung vermischt und in den Fernwärmerücklauf geleitet. In der Folge steigt die Primärrücklauftemperatur über die Temperatur aus der Heizung von ca. 38 °C auf ca. 43,1 °C, also um ca. 4,9 K. Gemäß der erfindungsgemäßen Lösung entspricht die Fernwärmerücklauftemperatur der primärseitigen Rücklauftemperatur aus der Heizung von ca. 38 °C, und die Fernwärmedurchsatzmenge liegt um ca. 12 % niedriger.

Bei einer Außentemperatur von 2 °C wird eine Heizungsvorlauftemperatur von 52 °C überschritten, die mit einer Rücklauftemperatur aus der Warmwasserbereitung von ca. 57 °C bei reiner Zirkulation erreicht werden könnte. Die gleitende Vorlauftemperatur in einem Fernwärmenetz beträgt dann bereits mehr als 98 °C und die erforderliche Heizleistung ca. 47 % von der Auslegungsleistung. Bei den herkömmlichen Schaltungen hätte es durch Mischung eine Anhebung der Rücklauftemperatur auf ca. 49,4 °C gegeben, also eine Anhebung um 1,6 K. Mit der erfindungsgemäßen Lösung erniedrigt sich die Fernwärmerücklauftemperatur nun auf ca. 47,8 °C - den Rücklauf aus der Heizung, und die Fernwärmedurchsatzmenge wird um ca. 3 % gesenkt.

Besonders groß ist der Nutzen gegen Ende der Heizsaison bei einer Außentemperatur von ca. 12 °C. Die Rücklauftemperatur wäre mit der erfindungsgemäßen Lösung um 7,2 K niedriger (35,3 °C anstelle 42,6 °C), die Fernwärmedurchsatzmenge - um 16 %.

Da in der Praxis die Primärrücklauftemperaturen kaum unter 60 °C betragen, ist auch der Nutzen der erfindungsgemäßen Schaltungen faktisch um ein Vielfaches höher.

Neben den Darstellungen des bekannten Stands der Technik sind in den Zeichnungen Ausführungsbeispiele der vorliegenden Erfindung dargestellt und werden im folgenden näher beschrieben, um die Vorteile eingehender zu erläutern. Es zeigen:
- Fig. 1: eine Hausanschlussstation (HAST) mit zweistufiger Warmwasserbereitung nach Munser H., Fernwärmeversorgung, VEB Deutscher Verlag für Grundstoffindustrie, Leipzig, 2. überarbeitete Auflage, 1983, S. 272,
- Fig. 2: eine HAST mit zweistufiger Warmwasserbereitung nach SP 41-101-95, Projektirowanije teplowych punktow, MINSTROI Rossii, Moskau, 1995, S. 14,

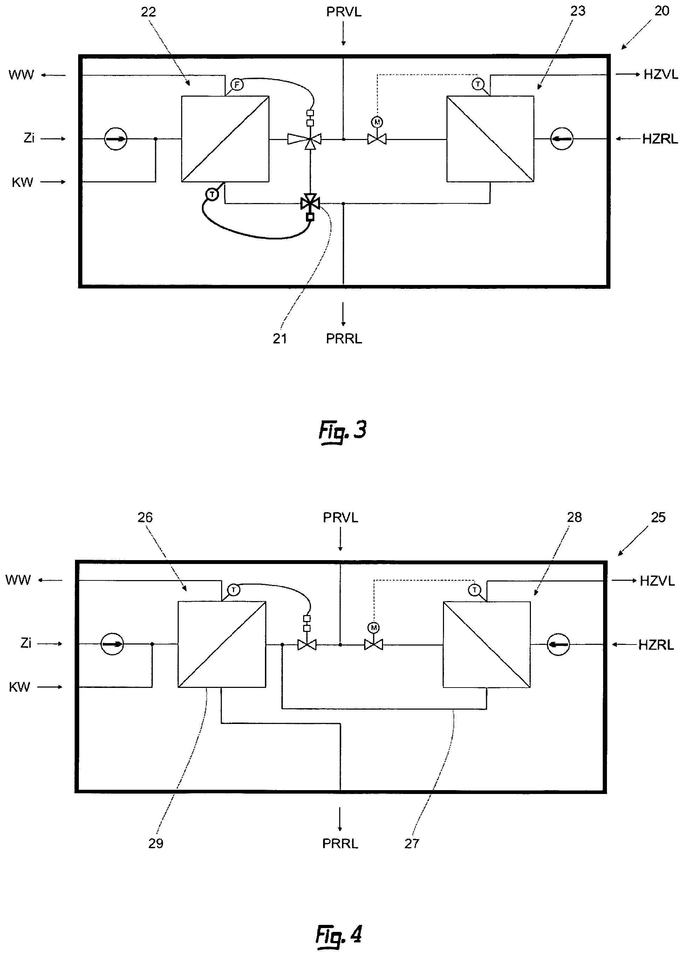

- Fig. 3: eine HAST mit einstufiger Warmwasserbereitung nach DE 196 42 179 A1,
- Fig. 4: eine HAST mit einstufiger Warmwasserbereitung nach DE 20 2006 018 246 U1, Anlage 1,

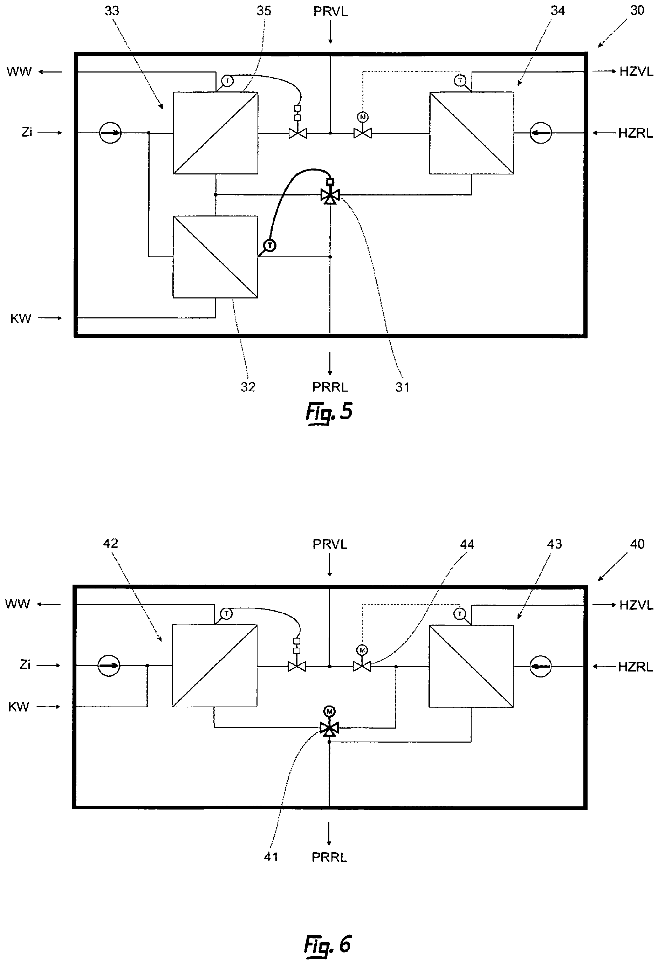

- Fig. 5: eine HAST mit zweistufiger Warmwasserbereitung nach DE 102 54 889 A1,
- Fig. 6: eine HAST mit einstufiger Warmwasserbereitung nach Kunst B., Domestic Hot Water Tanks Charged by High Efficient Heating Systems, Euro Heat&Power English Edition, Vol. 4, IV/2007, S. 31,
- Fig. 7: eine HAST gemäß einer ersten Ausführungsform der Erfindung,
- Fig. 8: eine HAST gemäß einer zur ersten Ausführungsform alternativen zweiten Ausführungsform der Erfindung,
- Fig. 9: eine HAST gemäß einer dritten Ausführungsform der Erfindung,
- Fig. 9a: eine erste Abwandlung der HAST gemäß der dritten Ausführungsform der Erfindung,
- Fig. 9b: eine zweite Abwandlung der HAST gemäß der dritten Ausführungsform der Erfindung,
- Fig. 10: eine HAST gemäß einer vierten Ausführungsform der Erfindung,
- Fig. 11: eine HAST gemäß einer fünften Ausführungsförm der Erfindung,
- Fig. 12: eine HAST gemäß einer sechsten Ausführungsform der Erfindung,
- Fig. 13: eine HAST gemäß einer siebten Ausführungsform der Erfindung in einem ersten Betriebszustand,
- Fig. 14: eine HAST gemäß der siebten Ausführungsform der Erfindung nach Fig. 13 in einem zweiten Betriebszustand,
- Fig. 15: die HAST gemäß der siebten Ausführungsform der Erfindung nach Fig. 13 in einem dritten Betriebszustand und
- Fig. 16: eine Abwandlung der HAST gemäß der siebten Ausführungsform der Erfindung nach Fig. 13.

Für die gleichen oder die selben Elemente werden im Folgenden gleiche oder selbe Bezugszeichen verwendet, wobei bezüglich einer bestimmten Figur nicht beschriebene Elemente nicht mit Bezugszeichen versehen sind, gleichwohl aber die gleiche Funktion erfüllen.

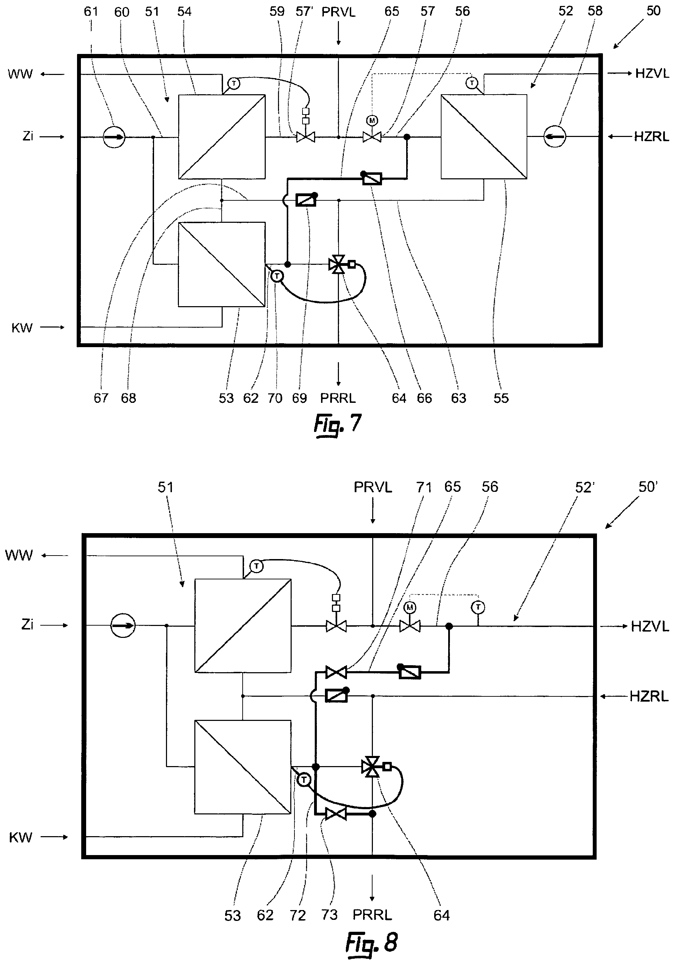

In Fig. 7 ist eine HAST 50 nach einer ersten erfindungsgemäßen Ausführungsform rein schematisch dargestellt. Die HAST 50 weist einen Warmwasserbereiter 51 und einen Heizversorger 52 auf, wobei der Warmwasserbereiter 51 zweistufig mit Hilfe eines ersten Wärmeübertragers 53, der als Vorwärmer arbeitet, und eines zweiten Wärmeübertragers 54, der als Nachwärmer arbeitet, ausgebildet ist und der Heizversorger 52 einstufig mit einem dritten Wärmeübertrager 55 ausgebildet ist. Sowohl der Warmwasserbereiter 51 als auch der Heizversorger 52 sind an den Primärvor- PRVL und -rücklauf PRRL eines Fernwärmenetzes als zentraler Wärmeversorgung angeschlossen. Dabei ist die direkte Verbindung des primärseitigen Vorlaufs 56 des Wärmeübertragers 55 des Heizversorgers 52 mit dem Primärvorlauf PRVL über ein temperatur- und/oder zeitabhängig steuerbares Regelventil 57 absperrbar, wobei insbesondere die Heizungsvorlauftemperatur als Regelgröße verwendet wird, und der Heizkreislauf aus Heizungsvor- HZVL und -rücklauf HZRL ist optional über eine Pumpe 58 antreibbar. Der primärseitige Vorlauf 59 des Nachwärmers 54 des Warmwasserbereiters 51 ist ebenfalls über ein temperatur- und/oder zeitabhängig steuerbares Regelventil 57' gegenüber dem Primärvorlauf PRVL absperrbar, wobei insbesondere die Temperatur des erzeugten Warmwassers WW als Regelgröße verwendet wird. Dem Vorwärmer 53 des Warmwasserbereiters 51 wird Kaltwasser KW zugeführt und weiter zum sekundärseitigen Vorlauf 60 des Nachwärmers 54 des Warmwasserbereiters 51 geleitet, wo es mit dem Wasser aus der Zirkulation Zi gemischt wird. Die Zirkulation Zi wird optional über eine Pumpe 61 aufrechterhalten.

Die primärseitigen Rückläufe 62, 63 des Vorwärmers 53 des Warmwasserbereiters 51 und des Heizversorgers 52 sind über ein Dreiwegeventil 64 als Mischventil mit dem Primärrücklauf PRRL verbunden. Außerdem ist der primärseitige Rücklauf 62 des Vorwärmers 53 des Warmwasserbereiters 51 über eine Verbindungsleitung 65 mit dem primärseitigen Vorlauf 56 des Wärmeübertragers 55 des Heizversorgers 52 verbunden, wobei der Rückfluss in den primärseitigen Rücklauf 62 des Vorwärmers 53 des Warmwasserbereiters 51 und weiter in den Primärrücklauf PRRL über ein Rücksperrventil 66 unterbunden ist. Der primärseitige Rücklauf 63 des Heizversorgers 52 wiederum ist zusätzlich über die Verbindungsleitung 67 mit dem primärseitigen Vorlauf 68 des Vorwärmers 53 des Warmwasserbereiters 51 verbunden, wobei der Rückfluss in die Verbindungsleitung 67 zum primärseitigen Rücklauf 63 des Heizversorgers 52 und weiter in den Primärrücklauf PRRL über ein Rücksperrventil 69 unterbunden ist. Das Dreiwegeventil 64 wird über einen Temperaturfühler 70 gesteuert, der mit dem primärseitigen Rücklauf 62 des Vorwärmers 53 des Warmwasserbereiters 51 verbunden ist.

Die HAST 50 wird nun wie folgt betrieben. Bei Überschreiten der eingestellten Solltemperatur von z.B. 45 °C am Temperaturfühler 70, was der Fall sein kann bei reiner Warmwasserzirkulation mit ca. 57 °C, sofern nicht durch die Zumischung von kaltem Rücklaufwasser aus dem Heizversorger 52 zum Rücklauf des Nachwärmers 54 des Warmwasserbereiters 51 bereits eine niedrigere Rücklauftemperatur als 45 °C vorliegt, oder bei sehr hohen Rücklauftemperaturen aus der Heizung 52 von z.B. >55 °C, wird der primärseitige Rücklauf 62 des Wärmeübertragers 53 des Warmwasserbereiters 51 vom Dreiwegeventil 64 gegenüber dem Primärrücklauf PRRL gesperrt. Die beiden anderen Wege des Dreiwegeventils 64 bilden jetzt einen Bypass um den Vorwärmer 53, durch den der primärseitige Rücklauf 63 aus dem Heizversorger 52 um den Vorwärmer 53 geleitet wird. Vordringliches Ziel dieser Schaltung 50 ist, den primärseitigen Rücklauf 62 hoher Temperatur aus der Warmwasserbereitung 51 nicht mit dem primärseitigen Rücklauf 63 niedriger Temperatur aus dem Heizversorger 52 unter die Solltemperatur von z.B. 45 °C zu vermischen, sondern vielmehr den primärseitigen Rücklauf 62 aus der Warmwasserbereitung 51 in dem Heizversorger 52 weiter auszukühlen. Dies wird dadurch erreicht, dass der durch das Dreiwegeventil 64 gegenüber dem Primärrücklauf PRRL gesperrte primärseitige Rücklauf 62 des Warmwasservorwärmers 53 über einen weiteren Bypass 65 dem primärseitigen Vorlauf 56 in den Heizversorger 52 zugemischt wird. Damit es bei geöffnetem primärseitigen Rücklauf 62 des Vorwärmers 53 nicht zu einer Rückströmung von Primärvorlaufwasser 56 aus dem Heizversorger 52 in den primärseitigen Rücklauf 62 des Vorwärmers 53 und weiter in den primärseitigen Rücklauf PRRL kommt, ist dieser Bypass 65 mit einem Rücksperrventil 66 ausgestattet. Das in dem Heizversorger 52 ausgekühlte Gemisch aus Primärvorlaufwasser 56 und Rücklaufwasser 62 der Warmwasserbereitung 51 wird weiter über das Dreiwegeventil 64 dem Primärrücklauf PRRL des Fernwärmenetzes zugeführt.

Fällt nun die Rücklauftemperatur am primärseitigen Rücklauf 62 des Vorwärmers 53 bei einer größeren Warmwasserzapfung mit z.B. 25 °C weit unter die Solltemperatur von z.B. 45 °C ab, so wird über den Temperaturfühler 70 des Dreiwegeventils 64 dieses umgestellt und der primärseitigen Rücklauf 62 des Vorwärmers 53 wird gegenüber dem Primärrücklauf PRRL vollständig freigegeben. Das kalte Rücklaufwasser aus dem Vorwärmer 53 fließt direkt in den Primärrücklauf PRRL des Fernwärmenetzes. Der Rücklauf aus dem Heizversorger hingegen dient gänzlich der Vorwärmung in dem Warmwasserbereiter 51. Beide Rücklaufströme gemeinsam werden im Vorwärmer 53 weiter ausgekühlt. Dadurch steigt die Rücklauftemperatur wieder auf ca. 30 °C. Da der Bypass zum Vorwärmer 53 durch das Dreiwegeventil 64 weiter vollständig gesperrt bleibt, fließt der Rücklauf aus dem Heizversorger wie in den herkömmlichen zweistufigen Schaltungen dem primärseitigen Vorlauf 68 des Vorwärmers 53 ganz zu und mischt sich dort mit dem Primärrücklauf aus dem Nachwärmer 54 des Warmwasserbereiters 51.

Ist z.B. der Primärrücklauf aus dem Heizversorger 52 in Temperatur und Menge so groß oder liegt nur eine so kleine Zapfung vor, dass der Gesamtrücklauf aus dem Vorwärmer 53 die Soll-temperatur von z.B. 45 °C am Temperaturfühler 70 erreicht und überschreitet, so öffnet das Dreiwegeventil 64 den Bypass zum Vorwärmer 53 teilweise soweit, bis diese Solltemperatur nicht mehr überschritten sondern wieder eingehalten wird. Der nicht erforderliche Rücklaufstrom des Heizversorgers 52 strömt über den Bypass am Vorwärmer 53 vorbei und mischt sich im Dreiwegeventil 64 mit dem Rücklauf aus dem Warmwasserbereiter 51. So wird gleichzeitig eine Überhitzung des primärseitigen Warmwassers im Vorwärmer 53 vermieden, wie in [D1] beabsichtigt. Damit der primärseitige Rücklauf aus dem Nachwärmer 54 nicht ebenfalls am Vorwärmer 53 vorbei abströmen kann, ist der Zufluss 67 des Heizungsrücklaufwassers mit einem Rücksperrventil 69 ausgerüstet. Mit diesen vergleichsweise einfachen Ergänzungen und leichten Änderungen bekannter Schaltungen wird also eine bedeutende Verringerung der Rücklauftemperatur während des Zirkulationsbetriebes erreicht. Entsprechend sinkt auch der Bedarf an Primärwasser. Diese Verbesserungen sind besonders groß in der Übergangszeit an normalen und über die gesamte Heizsaison bei Niedertemperaturheizsystemen, wo in beiden Fällen die Rücklauftemperatur aus dem Heizversorger 52 niedriger ausfällt, als die naturgegebene Rücklauftemperatur aus dem Warmwasserbereiter 51 während des Zirkulationsbetriebes von ca. 57 °C.

In der in Fig. 7 dargestellten HAST 50 ist der Heizversorger 52 indirekt über einen dritten Wärmeübertrager 55 an das Primärnetz PRVL, PRRL angeschlossen. Der Heizversorger 52 kann allerdings alternativ auch direkt an das Primärnetz PRVL, PRRL angeschlossen sein, wie in Fig. 8 für eine zu Fig. 7 alternative Ausgestaltung der HAST 50' gezeigt ist.

Zusätzlich zu den schon aus Fig. 7 für HAST 50 bekannten Elementen, die daher nicht noch einmal beschrieben werden, weist die HAST 50' in der Bypassleitung 65 zwischen dem primärseitige Rücklauf 62 des Vorwärmers 53 des Warmwasserbereiters 51 und dem primärseitigen Vorlauf 56 des direkten Heizversorgers 52' ein Sperrventil 71 auf. Außerdem ist ein Bypass 72 zwischen dem primärseitigen Rücklauf 62 des Vorwärmers 53 des Warmwasserbereiters 51 und dem Primärrücklauf PRRL vorgesehen, der der Umgehung des Dreiwegeventils 64 dient. In diesem Bypass 72 ist ebenfalls ein Sperrventil 73 vorgesehen. Damit nun außerhalb der Heizsaison über den direkten Heizversorger 52' keine Heizung erfolgt, wird in dieser Zeit das Sperrventil 71 geschlossen und das Sperrventil 73 geöffnet, so dass der primärseitige Rücklauf 62 der Vorwärmung 53 des Warmwasserbereiters 51 immer mit dem Primärrücklauf PRRL verbunden ist, während innerhalb der Heizsaison das Sperrventil 71 offen und das Sperrventil 73 geschlossen sind, so dass der für HAST 50 in Fig. 7 dargestellte Betriebsfall gewährleistet ist. Die Sperrventile 71 und 73 können fraglos auch durch ein Dreiwegeumschaltventil ersetzt werden (nicht gezeigt). Desweiteren kann das Sperrventil 73 alternativ auch über einen beliebigen Antrieb verfügen, so dass es beispielsweise auch als Überströmventil ausgeführt sein kann (nicht gezeigt), um bei geschlossener Heizung 52' automatisch für ein Abströmen des Rücklaufs 62 aus der Warmwasserbereitung 51 zu sorgen.

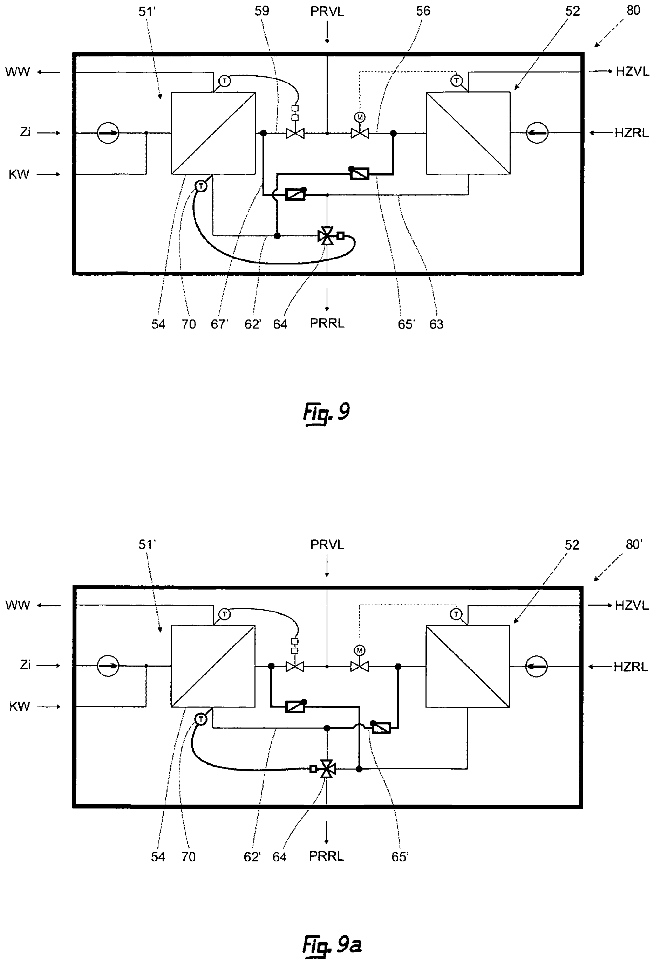

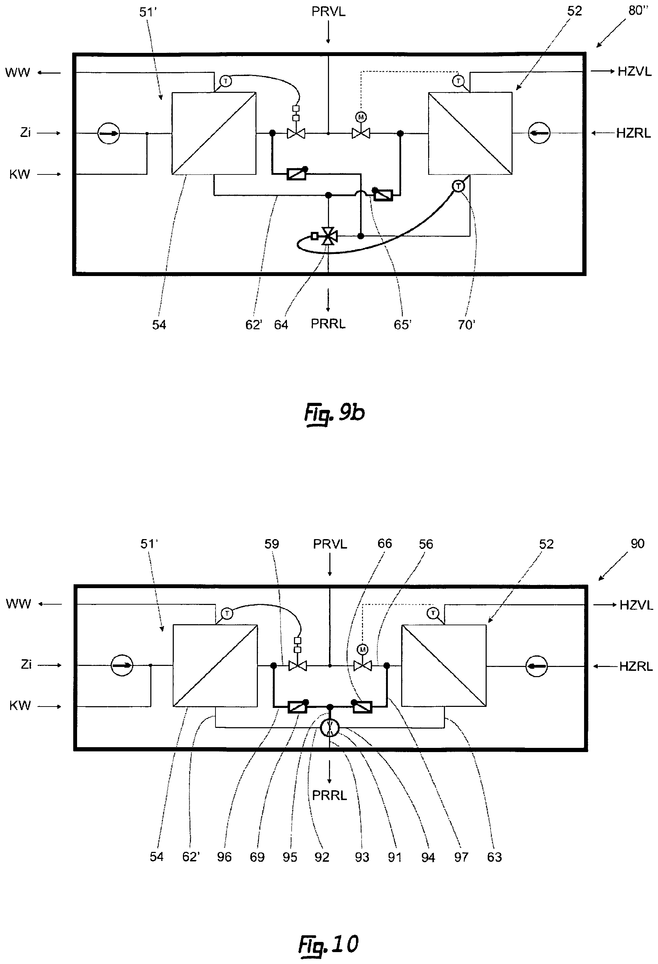

In Fig. 9 ist eine weitere Ausführungsform der HAST 80 gemäß der vorliegenden Erfindung rein schematisch dargestellt. Die HAST 80 gleicht grundsätzlich der HAST 50, wobei allerdings kein zweistufiger, sondern nur ein einstufiger Warmwasserbereiter 51' besteht. Der primärseitige Rücklauf 62' des Wärmeübertragers 54 des Warmwasserbereiters 51' ist hierbei über den Bypass 65' mit dem primärseitigen Vorlauf 56 des Heizversorgers 52 verbunden und der primärseitige Rücklauf 63 des Heizversorgers 52 ist über den Bypass 67' mit dem primärseitigen Vorlauf 59 des Wärmeübertragers 54 des Warmwasserbereiters 51' verbunden.

Diese Ausgestaltung der HAST 80 ist beispielsweise vorteilhaft, wenn keine zweistufige Rücklaufauskühlung aus der Heizung üblich ist. So genügt z.B. bei einem Verhältnis der thermischen Leistungen der Warmwasserbereitung und der Heizung von weniger als 0,2 oder mehr als 1, wie in [D2] vorgeschrieben, die einstufige Warmwasserbereitung 51'. Um auch in diesem Fall den Rücklauf aus der Heizung in der Warmwasserbereitung und umgekehrt nutzen zu können, und die Heizung bei zu großem Rücklauf aus der Warmwasserbereitung nicht negativ zu beeinflussen, oder die Primärrücklauftemperatur anzuheben, ist am primärseitigen Rücklauf 62' des einstufigen Warmwasserbereiters 51' das bereits beschriebene Dreiwegemischventil 64 erfindungsgemäß installiert und dessen Temperaturfühler 70 ebenfalls. Der primärseitige Rücklauf 63 des Heizversorgers 52 ist an den primärseitigen Vorlauf 59 des einstufigen Warmwasserbereiters 51' angeschlossen. Die Funktionsweise ist ähnlich der bereits für HAST 50 beschriebenen zweistufigen Schaltung. Durch die Mischung von Vorlauf- und Rücklaufwasser entsteht jedoch stets ein Exergieverlust. Ist dies zur Verhinderung der Verkalkung am Warmwasserbereiter 51' ggf. zu akzeptieren, wie für [D3] bereits beschrieben, so kann es sich bei der Heizung negativ auswirken, wie für [D2] und [D4] bereits beschrieben.

In Fig. 9a ist eine erste alternative Ausgestaltung 80' zu der HAST 80 aus Fig. 9 rein schematisch dargestellt. Der einzige Unterschied besteht in der Ankopplung des Heizversorgers 52 und des Warmwasserbereiters 51' an das umgekehrt zu HAST 80 wirkende Dreiwegeventil 64 bezüglich der Durchflusswege. Auch hier wird allerdings wieder der Primärrücklauf PRRL gegenüber dem primärseitigen Rücklauf 62' des Wärmeübertragers 54 des Warmwasserbereiters 51' bei Temperaturen >45°C an dem Temperaturfühler 70 gesperrt und dieser Strom über die Verbindungsleitung 65' dem Heizversorger 52 zugeführt und dort weiter ausgekühlt, während der primärseitige Rücklauf des Heizversorgers 52 über einen Bypass durch das Dreiwegeventil 64 direkt dem Primärrücklauf PRRL zugeführt wird. Somit ist die HAST 80' praktisch gleichwirkend zu der HAST 80 aus Fig. 9.

In Fig. 9b ist eine zweite alternative Ausgestaltung 80" zu der HAST 80 aus Fig. 9 rein schematisch dargestellt. Der Unterschied besteht zum einen in der Ankopplung des Heizversorgers 52 und des Warmwasserbereiters 51' an das Dreiwegeventil 64 bezüglich der Durchflusswege und zum anderen in der Ansteuerung des wie in HAST 80 wirkenden Dreiwegeventils 64, dessen Temperaturfühler 70' jetzt über den primärseitigen Rücklauf des Heizversorgers 52 regelt. Bei dieser HAST 80" wird nun die Rücklauftemperatur aus dem Heizversorger 52 über den Temperaturfühler 70' gemessen und als Schalttemperatur für das Dreiwegeventil 64 gewählt. In der Heizversorgung gibt es aber eine größere Variantenvielfalt der möglichen Systeme und Rücklauftemperaturen, die sich zusätzlich über die Heizsaison ändern, d.h. mit steigender Außentemperatur fallen. Deshalb ist die HAST 80" in Bezug auf die HAST 80 und HAST 80' zwar ebenfalls funktionstüchtig aber nicht so universell einsetzbar. Außerdem wird nicht indirekt vor der Verkalkung des Warmwasserbereiters 51' geschützt, da höhere Rücklauftemperaturen aus dem Heizversorger 52 als die eingestellte immer durch den Warmwasserbereiter 51' geführt werden.

In der Warmwasserbereitung im Durchflussprinzip sind praktisch nur drei Zustände bekannt: a) Warmwasserbereitung mit niedrigen Rücklauftemperaturen, z.B. 25 °C bei voller Zapfung, b) Zirkulation mit Rücklauftemperaturen leicht über der Zirkulationstemperatur, z.B. 57 °C und c) Teillast-Warmwasserbereitung mit teilweiser Zirkulation mit Rücklauftemperaturen zwischen 25 °C und 57 °C, z.B. 45 °C. Die Festlegung auf eine Schalttemperatur des Dreiwege-Ventils von z.B. 45 °C gewährleistet, den Zustand der reinen Zirkulation und kleiner WarmwasserZapfungen erfasst zu haben. Außerdem sind die Rücklauftemperaturen ≤ 45 °C dann niedriger, als die vorgeschriebene Soll-Rücklauftemperatur der meisten Fernwärmeversorger in Deutschland (50 °C). Sofern diese Soll-Rücklauftemperatur gleich oder niedriger als 45 °C ist, so kann diese Temperatur als Schalttemperatur am Dreiwegeventil eingestellt werden (jeweils abzüglich einer gewissen Regel(un)genauigkeit von z.B. 5 K, also z.B. 40 °C.

Die Festlegung der Rücklauftemperatur, bei deren Überschreitung das Dreiwegeventil 64 den Rücklauf aus der Warmwasserbereitung sperrt, z.B. fest auf 45 °C oder 40 °C, ist noch immer nicht das Optimum. Es kann auch Konstellationen geben, wo niedrigere Rücklauftemperaturen aus der Warmwasserbereitung noch in der Heizung genutzt und weiter ausgekühlt werden können. Aus diesem Grund sind auch ein elektrischer Antrieb des Dreiwegeventils 64 und/oder eine Temperaturdifferenzsteuerung denkbar (beide nicht gezeigt), die die Temperaturen der Rückläufe aus der Warmwasserbereitung und der Heizung vergleicht, und den jeweils kälteren Rücklauf in den Fernwärmerücklauf PRRL entlässt. Negativ wären lediglich der Verbrauch von Elektroenergie und der Ausfall des Antriebs bei deren Fehlen, sowie die erfahrungsgemäß höhere Ausfallwahrscheinlichkeit gegenüber thermostatischen Antrieben, wobei jedoch die Warmwasserbereitung und Heizversorgung weiter funktionsfähig wären.

In Fig. 10 ist eine weitere alternative Ausgestaltung der HAST 90 gemäß der vorliegenden Erfindung rein schematisch dargestellt, wobei die HAST 90 grundsätzlich der HAST 80 aus Fig. 9 gleicht. Unterschiedlich zur HAST 80 ist jedoch, dass statt des Dreiwegeventils 64 ein Vierwegemischer 91 als thermische Weiche verwendet wird, der beispielsweise mit einem elektrischen Antrieb und einer Temperaturdifferenzsteuerung versehen ist (nicht gezeigt). Alternativ kann die thermische Weiche 91 auch rein thermisch angetrieben ausgebildet sein.

Die thermische Weiche 91 weist vier Ein- bzw. Ausgänge 92, 93, 94, 95 auf, wobei ein erster 92 mit dem primärseitigen Rücklauf 62' des Wärmeübertragers 54 des Warmwasserbereiters 51', ein zweiter 93 mit dem Primärrücklauf PRRL der Fernwärmeversorgung, ein dritter 94 mit dem primärseitigen Rücklauf 63 des Heizversorgers 52 und ein vierter 95 über Bypässe 96, 97 mit den primärseitigen Vorläufen 59, 56 des Warmwasserbereiters 51' und des Heizversorgers 52 verbunden sind. Zur Verhinderung eines Rücklaufs in die thermische Weiche 91 sind in den Bypässen 96, 97 jeweils Rücksperrventile 69, 66 vorgesehen. Die Beschreibung der Funktion der thermischen Weiche 91 erfolgt weiter unten im Zusammenhang mit der Beschreibung der achten Ausführungsform der vorliegenden Erfindung.

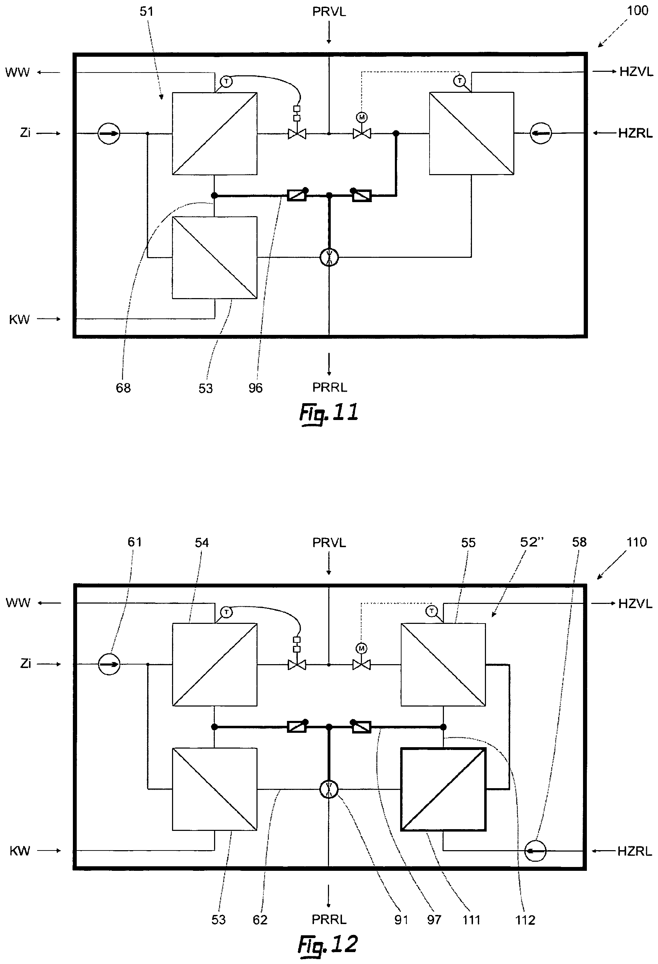

In Fig. 11 ist eine weitere alternative Ausgestaltung der HAST 100 gemäß der vorliegenden Erfindung rein schematisch dargestellt, wobei die HAST 100 grundsätzlich der HAST 90 aus Fig. 10 gleicht. Unterschiedlich zur HAST 90 ist jedoch, dass ein zweistufiger Warmwasserbereiter 51 vorgesehen ist. Dabei ist der Bypass 96 nun mit dem primärseitigen Vorlauf 68 des Vorwärmers 53 des Warmwasserbereiters 51 verbunden. Hierbei bleibt jedoch das Problem der Senkung der Exergie durch die Vermischung von Primärvorlauf der Fernwärme und Rücklaufwasser aus der Warmwasserbereitung vor der Heizung bestehen, was unter bestimmten Bedingungen nachteilig ist.

Dieses Problem kann gemäß einer weiteren Ausgestaltung der HAST 110, wie in Fig. 12 rein schematisch dargestellt ist, dadurch gelöst werden, dass auch der Heizversorger 52" zweistufig mit einem Vorwärmer 111 und einem Nachwärmer 55 ausgeführt wird. Der primärseitige Rücklauf 62 des Vorwärmers 53 des Warmwasserbereiters ist dann über die thermische Weiche 91 und den Bypass 97 mit dem primärseitigen Vorlauf 112 des Vorwärmers 111 des Heizversorgers 52" verbindbar gekoppelt. Diese Schaltung 110 führt zu niedrigen Rücklauftemperaturen und Primärdurchsatzmengen. Es steigen allerdings der apparative Aufwand und der Platzbedarf. Die Auslegung und die Auswahl der vier Wärmeübertrager 53, 54, 55, 111 erfordern mehrfache Iterationen und einen großen Zeitaufwand. Die Aufteilung der Gesamtleistung auf zwei Wärmeübertrager 53, 54 und 55, 110 bleibt letztendlich ein Kompromiss, weil nicht alle Betriebsfälle optimal erfasst werden können. Die hydraulische Reihenschaltung von zwei bis drei Wärmeübertragern 53, 54, 55, 110 führt zu erhöhtem Druckverlust und Energieaufwand, insbesondere auf der Seite einer indirekten Heizung 52", wo die Zirkulation mit einer eigenen Umwälzpumpe 58 erfolgt. Der Rücklauf aus der Heizung kann nicht für die Erwärmung der Warmwasserzirkulation Zi genutzt werden.

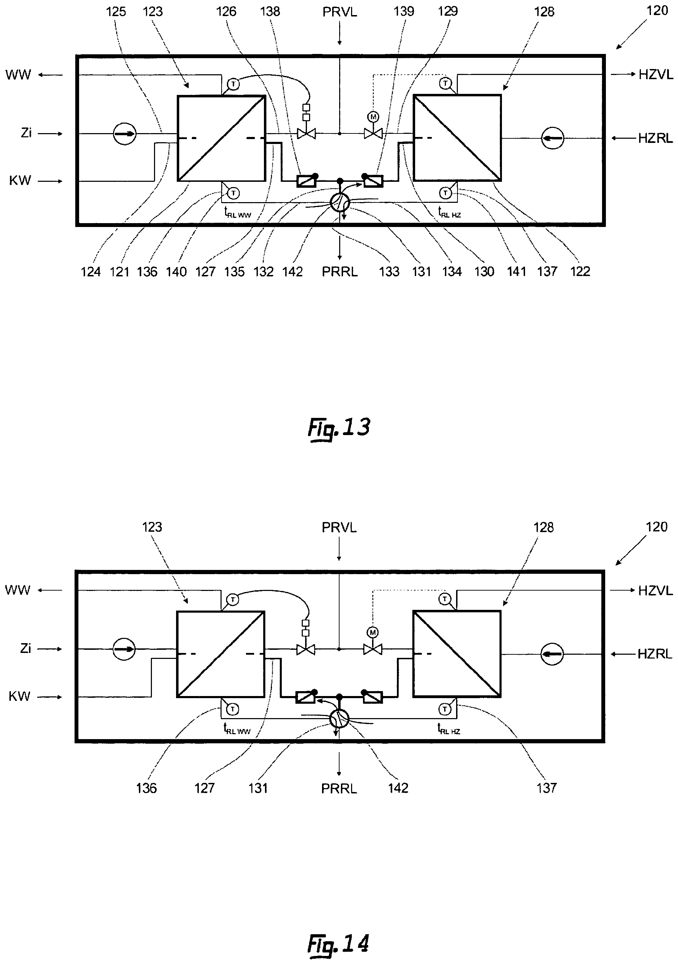

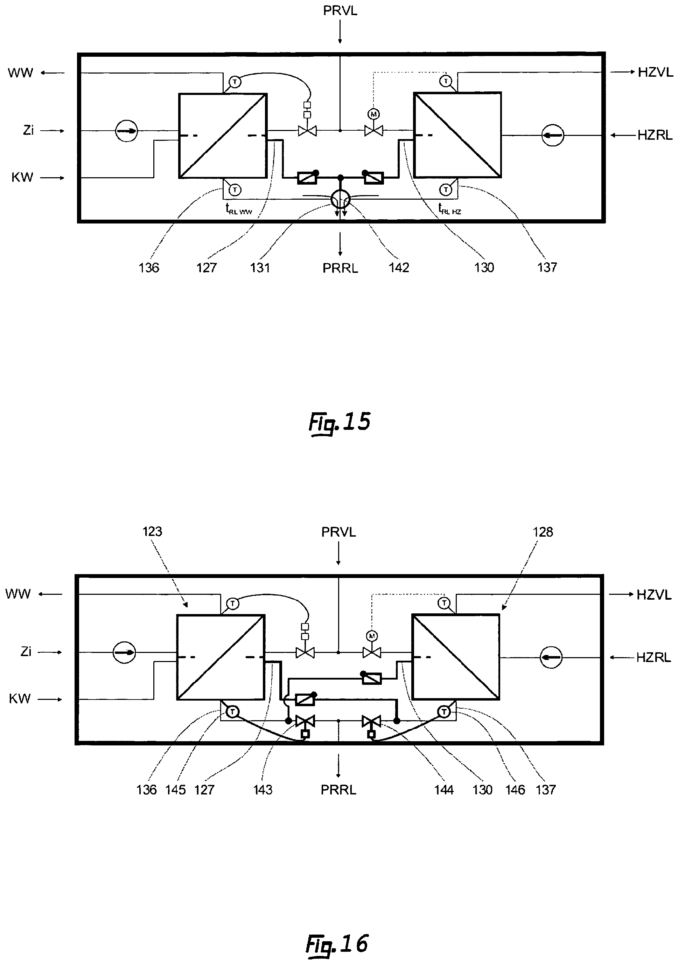

Aus diesem Grund ist es von Vorteil, bei dieser Schaltung 120 für die Warmwasserbereitung und/oder die Heizung Wärmeübertrager 121, 122 für mindestens drei Wärmeträgermedien, die gemäß DE 100 07 574 A1 ausgelegt sind, zu verwenden, wobei auf dieses Dokument bezüglich der Ausgestaltung der Wärmeübertrager 121, 122 und ihrer Funktionsweise vollumfänglich verwiesen wird. Die genaue Ausgestaltung gemäß dieser alternativen Ausführungsform ist für die HAST 120 in Fig. 13 rein schematisch dargestellt, wobei Fig. 14 und 15 jeweils zu Fig. 13 unterschiedliche Betriebszustände der HAST 120 aufzeigen.

Der Wärmeübertrager des zweistufigen Warmwasserbereiters 123 ist als Viermedien-Wärmeübertrager 121 ausgebildet, und zwar sind sekundärseitig durch Zuleitungen 124, 125 ein Zufluss von Kaltwasser KW bzw. Zirkulationswasser Zi vorgesehen und primärseitig durch Zuleitungen 126, 127 ein Zufluss von Primärmedium aus dem Primärvorlauf PRVL der Fernwärmeversorgung bzw. primärseitigen Rücklaufmediums aus dem Heizversorger 128. Der Wärmeübertrager des zweistufigen Heizversorgers 128 ist als Dreimedien-Wärmeübertager 122 ausgebildet, der primärseitig durch Zuleitungen 129, 130 einen Zufluss von Primärmedium aus dem Primärvorlauf PRVL bzw. primärseitigen Rücklaufmediums aus dem Warmwasserbereiter 123 ermöglicht. Die Wärmeübertrager 121, 122 sind gemäß DE 100 07 574 A1 so ausgelegt, dass eine Vermischung der primär- bzw. sekundärseitig eingespeisten Medien im Wesentlichen erst im jeweiligen Rücklauf erfolgt, wodurch im Wesentlichen kein Exergieverlust auftritt. Dadurch wird beispielsweise für die Warmwasserbereitung bewirkt, dass stets nur maximal zwei Wärmeübertrager in Reihe geschaltet sind und auch noch der Rücklauf aus der Heizung bei ausreichender Temperatur für die Erwärmung des zirkulierenden Warmwassers genutzt werden kann. Die gesamte Wärmeübertragerfläche steht jeweils für alle möglichen Prozesse zur Verfügung, ohne eine scharfe Trennung zwischen den Stufen. So können sowohl die Zirkulation wie auch die Vorwärmung über den gesamten Wärmeübertrager 121 erfolgen.

Primärseitig ist zwischen dem Warmwasserbereiter 123 und dem Heizversorger 128 eine thermische Weiche 131 eingebunden, wobei die vier Ein- bzw. Ausgänge 132, 133, 134, 135 der thermischen Weiche 131 jeweils mit dem primärseitigen Rücklauf 136 des Warmwasserbereiters 123, dem Primärrücklauf PRRL der Fernwärmeversorgung, dem primärseitigen Rücklauf 137 des Heizversorgers 128 bzw. gleichzeitig mit den Bypässen 127 und 130 verbunden sind. Die Bypässe 127, 130 sind wiederum über entsprechende Rücksperrventile 138, 139 in Richtung zur thermischen Weiche 131 gesperrt.

Zur Steuerung der beispielsweise elektronisch geregelten thermischen Weiche 131 sind sowohl im primärseitigen Rücklauf 136 des Warmwasserbereiters 123 als auch im primärseitigen Rücklauf 137 des Heizversorgers 128 Temperaturfühler 140, 141 vorgesehen, wobei der Flussregler 142 der thermischen Weiche 131 in Abhängigkeit der Differenz der von den Temperaturfühlern 140, 141 ermittelten Temperaturen in Bezug auf einen Soll-Temperaturdifferenzwert gesteuert wird, wie nachfolgend anhand der Fig. 13 bis 15 erläutert wird. Dabei wird angenommen, dass der Soll-Temperaturdifferenzwert für eine Neutralstellung des Flussreglers 142 der thermischen Weiche 131 bevorzugt nahe 0 K (d.h. 0 K ± 0,5 K) beträgt, wie es auch bevorzugt wird für die vorliegende Erfindung, d.h. dass die primärseitigen Rückläufe der Warmwasserbereitung und der Heizversorgung eine gleich große Temperatur aufweisen.

In Fig. 13 ist ein erster Betriebszustand der HAST 120 dargestellt, bei dem der primärseitige Rücklauf der Warmwasserbereitung eine größere Temperatur aufweist als der primärseitige Rücklauf der Heizversorgung. In diesem Fall ist der Flussregler 142 der thermischen Weiche 131 so eingestellt, dass der primärseitige Rücklauf 136 des Warmwasserbereiters 123 mit dem Bypass 130 kommuniziert und der primärseitige Rücklauf 137 des Heizversorgers 128 mit dem Primärrücklauf PRRL der Fernwärmeversorgung kommuniziert, wie durch die Flusspfeile verdeutlicht wird. Wenn der primärseitige Rücklauf der Warmwasserbereitung zu warm ist, wird er also weiter in dem zweistufigen Heizversorger 128 ausgekühlt.

In Fig. 14 ist ein zweiter Betriebszustand der HAST 120 dargestellt, bei dem der primärseitige Rücklauf der Warmwasserbereitung eine kleinere Temperatur aufweist als der primärseitige Rücklauf der Heizversorgung. In diesem Fall ist der Flussregler 142 der thermischen Weiche 131 so eingestellt, dass der primärseitige Rücklauf 136 des Warmwasserbereiters 123 mit dem Primärrücklauf PRRL der Fernwärmeversorgung kommuniziert und der primärseitige Rücklauf 137 des Heizversorgers 128 mit dem Bypass 127 kommuniziert, wie durch die Flusspfeile verdeutlicht wird. Wenn der primärseitige Rücklauf der Heizversorgung zu warm ist, wird er also weiter in dem zweistufigen Warmwasserbereiter 123 ausgekühlt.

In Fig. 15 ist ein dritter Betriebszustand der HAST 120 dargestellt, bei dem primärseitiger Rücklauf der Warmwasserbereitung und primärseitiger Rücklauf der Heizversorgung die gleiche Temperatur aufweisen. In diesem seltenen Fall ist der Flussregler 142 der thermischen Weiche 131 so eingestellt, dass sowohl der primärseitige Rücklauf 136 des Warmwasserbereiters 123 als auch der primärseitige Rücklauf 137 des Heizversorgers 128 mit dem Primärrücklauf PRRL der Fernwärmeversorgung kommunizieren, wie durch die Flusspfeile verdeutlicht wird. Ein Rückfluss in die beiden Bypässe ist aus drucktechnischen Gründen nicht möglich.

Mit der HAST 120 wird eine sehr einfache, thermodynamisch optimale, universell einsetzbare und kompakte Schaltung 120 bereitgestellt mit kleinstmöglichem Druckverlust, Energieaufwand und stets minimal möglicher Primärrücklauftemperatur und -durchsatzmenge.

Für die thermische Weiche kann eine bekannte elektronische Vierwegeweiche verwendet werden, bei der der Flussregler 142 elektronisch über die Temperaturdifferenz gesteuert wird. Alternativ kann auch eine rein thermische Ansteuerung des Flussreglers 142 ohne elektronische Unterstützung erfolgen, so dass dann weniger Teile notwendig sind, keine Elektroenergie benötigt wird und auch die Ausfallwahrscheinlichkeit sinkt. Ausweichend ist es ebenfalls möglich, anstelle des Dreiwegeventils oder der thermischen Weiche zwei gesonderte Regelventile 143, 144 mit jeweils eigenen Temperaturfühlern 145, 146, insbesondere so genannte Rücklauftemperaturbegrenzer in jedem der Rückläufe 136, 137 der Warmwasserbereitung 123 und der Heizversorgung 128 vorzusehen (siehe Fig. 16), die bei jeweils steigenden Rücklauftemperaturen gegenüber jeweils gesonderten Sollrücklauftemperaturen schließen und/oder öffnen und das Rücklaufwasser über den jeweiligen Bypass 127, 130 zum Vorlauf der anderen Wärmequelle oder Wärmesenke (im vorliegenden Fall die beiden Wärmesenken Warmwasserbereitung 123 und der Heizversorgung 128) leiten. Damit kann individuell auf den Charakter der jeweiligen Wärmequelle oder Wärmesenke eingegangen werden, was sich unter bestimmten Umständen als optimal herausstellen kann.

In der Beschreibung bezüglich der siebenten Ausführungsform ist davon ausgegangen worden, dass der Flussregler 142 der thermischen Weiche 131 bezüglich bestimmter Flussrichtungen entweder vollständig offen oder vollständig geschlossen ist, also digital schaltet. Es kann allerdings analog auch vorgesehen sein, dass Zwischenstellungen einstellbar sind, wodurch eine noch effizientere Energienutzung ermöglicht wird, ebenso wie in den Schaltungen 90, 100 bzw. 110 auch. Es kann dann gegebenenfalls von Vorteil sein, in den Ausgang 95 bzw. 135 und/oder 93 bzw. 133 der thermischen Weiche 91 bzw. 131 zumindest eine primärseitige geregelte oder ungeregelte Umwälzpumpe einzubinden (nicht gezeigt).

Ebenso ist es natürlich möglich, anstelle der Regelventile 57 und/oder 57' bzw. an den Einbindungspunkten der Rückläufe 65, 63 bzw. 65', 67 oder 97, 96 geregelte oder ungeregelte Strahlpumpen zu verwenden (nicht gezeigt), die primärseitig getrieben sind und die Rückläufe 65, 63 bzw. 65', 67 oder 97, 96 entsprechend mit wechselndem oder festem Mischungsverhältnis je nach Stellung des Dreiwegeventils 64 oder der thermischen Weiche 91 bzw. 131 ansaugen. Ebenfalls kann es von Vorteil sein, bereits bekannte Vorrangschaltungen z.B. insbesondere der Warmwasserbereitung vor der Heizversorgung in den erfindungsgemäßen Schaltungen zu realisieren, um die Gesamtanschlussleistung der HAST zu minimieren.

Während stets von Primär- und Sekundärmedien gesprochen wird, so ist es natürlich auch möglich, mit den erfindungsgemäßen Schaltungen ebenso mit Sekundär- und/oder Tertiärmedien usw. zu arbeiten.

Um Medien unterschiedlichster Zusammensetzungen und Parameter nach den beschriebenen Verfahren und Vorrichtungen in Wärmeübertragung bringen zu können, kann es weiter von Vorteil sein, Sicherheitswärmeübertrager oder zumindest ein- oder mehrwandige Wärmeübertrager mit Leckageüberwachungseinrichtungen einzusetzen.

Aus den vorstehenden Ausführungen ist deutlich geworden, dass mit der vorliegenden Erfindung ein effizientes, einfaches, preiswertes und zuverlässiges Warmwasserbereitungs- und Heizsystem bereitgestellt wird, das insbesondere in allen Betriebsfällen eine minimal mögliche Rücklauftemperatur bewirkt. Auch ist es damit möglich, auf einfache Weise die Nachteile von bekannten Schaltungen zu überwinden, wodurch eine besonders einfache und kostengünstige Nachrüstung dieser bekannten Schaltungen ermöglicht wird.

So können die erfindungsgemäßen Lösungen auch für Warmwasserbereiter mit Boilern bzw. Speichern genutzt werden. Auch ist das Vorhandensein von ein- oder mehrstufigen Wärmeübertragern nicht zwingend. Die Kopplung kann vielmehr auch direkt erfolgen, sowohl in der Heizung als auch in der Warmwasserbereitung, was allerdings seltener der Fall ist.

Gleichfalls können die vorgeschlagenen Schaltungen auch überall dort genutzt werden, wo mindestens zwei Wärmesenken unterschiedlicher und/oder wechselnder Charakteristik zum Einsatz kommen, stets mit dem Ziel der optimalen mehrstufigen Auskühlung und/oder Aufwärmung eines Wärmeträgers.

Daher wird unabhängig von mit Heizversorgern gekoppelten Warmwasserbereitungssystemen selbständiger Schutz für solche Verfahren und Vorrichtungen nach den Ansprüchen 1 und 6 beansprucht, die die allgemeinste Formulierung der vorliegenden Erfindung wiedergeben. Dabei wird davon ausgegangen, dass zwei Betriebszustände für die Kopplung von zumindest zwei Wärmesenken vorgesehen sind. In dem ersten Betriebszustand der Wärmesenken wird der Wärmeträgermedienrücklauf der einen Wärmesenke zumindest teilweise in der anderen Wärmesenke weiter ausgekühlt, während in dem zweiten Betriebszustand der Wärmesenken der Wärmeträgermedienrücklauf der anderen Wärmesenke zumindest teilweise in der einen Wärmesenke weiter ausgekühlt wird. Die Wahl der jeweiligen Betriebsart hängt dann von den jeweiligen Temperaturen und der erzielbaren Effizienzsteigerung ab, so wie es am Beispiel für mit Heizversorgern gekoppelten Warmwasserbereitungssystemen oben stehend ausführlich beschrieben wurde, aber natürlich auch für andere Wärmenutzungssysteme entsprechend anwendbar ist.

**Bezugszeichenliste**

| | | | |
|---|---|---|---|
| PRVL | - Primärvorlauf | 40 | - HAST |
| PRRL | - Primärrücklauf | 41 | - Dreiwegeventil |
| HZVL | - Heizungsvorlauf | 42 | - Warmwasserbereiter |
| HZRL | - Heizungsrücklauf | 43 | -Heizversorger |
| KW | - Kaltwasser | 44 | - Regelventil |
| WW | - Warmwasser | 50 | - HAST |
| Zi | - Zirkulation | 50' | - HAST |
| 1 | - HAST | 51 | - Warmwasserbereiter |
| 2 | - Dreiwegeventil | 51' | - Warmwasserbereiter |
| 3 | - Wärmeübertrager | 52 | - Heizversorger |
| 4 | - Warmwasserbereiter | 52' | - Heizversorger |
| 5 | - Heizversorger | 52" | - Heizversorger |
| 10 | - HAST | 53 | - Wärmeübertrager Vorwärmstufe |
| 11 | - Wärmeübertrager Nachwärmstufe | 54 | - Wärmeübertrager Nachwärmstufe |
| 12 | - Warmwasserbereiter | 55 | - Wärmeübertrager Heizversorger |
| 13 | - Heizversorger | 56 | - primärseitiger Vorlauf |
| 14 | - Wärmeübertrager Vorwärmstufe | 57 | - Regelventil |
| 20 | - HAST | 57' | - Regelventil |
| 21 | - Dreiwegeventil | 58 | - Pumpe |
| 22 | - Wärmeübertrager Warmwasserbereiter | 59 | - primärseitiger Vorlauf |
| 23 | - Heizversorger | 60 | - sekundärseitiger Vorlauf |
| 25 | - HAST | 61 | - Pumpe |
| 26 | - Warmwasserbereitung | 62 | - primärseitiger Rücklauf |
| 27 | - Rücklauf | 62' | - primärseitiger Rücklauf |
| 28 | - Heizung | 63 | - primärseitiger Rücklauf |
| 29 | - Wärmeübertrager | 64 | - Dreiwegeventil |
| 30 | - HAST | 65 | - Bypass |
| 31 | - Dreiwegeventil | 65' | - Bypass |
| 32 | - Wärmeübertrager Vorwärmstufe | 66 | - Rücksperrventil |
| 33 | - Warmwasserbereiter | 67 | - Bypass |
| 34 | - Heizversorger | 67' | - Bypass |
| 35 | - Wärmeübertrager Nachwärmstufe | 68 | - primärseitiger Vorlauf |
| 69 | - Rücksperrventil | 124 | - Zuleitung |
| 70 | - Temperaturfühler | 125 | - Zuleitung |
| 70' | - Temperaturfühler | 126 | - Zuleitung |
| 71 | - Sperrventil | 127 | - Zuleitung |
| 72 | - Bypass | 128 | - Heizversorger |
| 73 | - Sperrventil | 129 | - Zuleitung |
| 80 | - HAST | 130 | - Zuleitung |
| 90 | - HAST | 131 | - thermische Weiche |
| 91 | - thermische Weiche | 132 | - Eingang |
| 92 | - Eingang | 133 | - Ausgang |
| 93 | - Ausgang | 134 | - Eingang |
| 94 | - Eingang | 135 | - Ausgang |
| 95 | - Ausgang | 136 | - primärseitiger Rücklauf |
| 96 | - Bypass | 137 | - primärseitiger Rücklauf |
| 97 | - Bypass | 138 | - Rücksperrventil |
| 100 | - HAST | 139 | - Rücksperrventil |
| 110 | - HAST | 140 | - Temperaturfühler |
| 111 | - Wärmeübertrager Vorwärmer | 141 | - Temperaturfühler |
| 112 | - primärseitiger Vorlauf | 142 | - Flussregler |
| 120 | - HAST | 143 | - Regelventil |
| 121 | - Viermedien-Wärmeübertrager | 144 | - Regelventil |
| 122 | - Dreimedien-Wärmeübertrager | 145 | - Temperaturfühler |
| 123 | - Warmwasserbereiter | 146 | - Temperaturfühler. |

## Patentansprüche

1. Verfahren zur Wärmenutzung, wobei mindestens zwei Wärmesenken (51; 51'; 53, 54; 123), (52; 52'; 52"; 128) mit jeweils mindestens einem Wärmeträgermedienrücklauf (62; 62'; 136), (63; 137), die eine unterschiedliche und/oder wechselnde Charakteristik aufweisen, mit jeweils mindestens einem hindurch geführten Wärmeträgermedium, miteinander in Bezug auf die Wärmenutzung gekoppelt sind, **dadurch gekennzeichnet, dass**
- in einem ersten Betriebszustand der Wärmeträgermedienrücklauf (62; 62'; 136) der ersten Wärmesenke (51; 51'; 53, 54; 123) so zumindest teilweise in die zweite Wärmesenke (52; 52'; 52"; 128) eingespeist wird, dass der Wärmeträgermedienrücklauf (62; 62'; 136) der ersten Wärmesenke (51; 51'; 53, 54; 123) zumindest teilweise in der zweiten Wärmesenke (52; 52'; 52"; 128) weiter ausgekühlt wird,
- wenn die Temperatur (70) des Wärmeträgermedienrücklaufs (62; 62'; 136) der ersten Wärmesenke (51; 51'; 53, 54; 123) oberhalb oder bei einer Soll-Temperatur des Wärmeträgermedienrücklaufs (62; 62'; 136) der ersten Wärmesenke (51; 51'; 53, 54; 123) ist,
oder,
- wenn die Temperatur (70') des Wärmeträgermedienrücklaufs der zweiten Wärmesenke (52) unterhalb oder bei einer Soll-Temperatur des Wärmeträgermedienrücklaufs der zweiten Wärmesenke (52) ist,
oder,
- wenn die Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) oberhalb oder bei einer Soll-Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) ist, und dass
- in einem zweiten Betriebszustand der Wärmeträgermedienrücklauf (63; 137) der zweiten Wärmesenke (52; 52'; 52"; 128) so zumindest teilweise in die erste Wärmesenke (51; 51'; 53, 54; 123) eingespeist wird, dass der Wärmeträgermedienrücklauf (63; 137) der zweiten Wärmesenke (52; 52'; 52"; 128) zumindest teilweise in der ersten Wärmesenke (51; 51'; 53, 54; 123) weiter ausgekühlt wird,
- wenn die Temperatur (70) des Wärmeträgermedienrücklaufs (62; 62'; 136) der ersten Wärmesenke (51; 51'; 53, 54; 123) unterhalb oder bei der Soll-Temperatur des Wärmeträgermedienrücklaufs (62; 62'; 136) der ersten Wärmesenke (51; 51'; 53, 54; 123) ist,
oder,
- wenn die Temperatur (70') des Wärmeträgermedienrücklaufs der zweiten Wärmesenke (52) oberhalb oder bei der Soll-Temperatur des Wärmeträgermedienrücklaufs der zweiten Wärmesenke (52) ist,
oder,
- wenn die Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) unterhalb oder bei der Soll-Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) ist.

2. Verfahren nach Anspruch 1, **dadurch gekennzeichnet, dass** mindestens zwei Wärmesenken verwendet werden zur Heizversorgung (52; 52'; 52"; 128) und Warmwasserbereitung (51; 51'; 123), insbesondere Warmwasserbereitung im Durchfluss, und wobei insbesondere sowohl die Heizversorgung (52; 52'; 52"; 128) als auch die Warmwasserbereitung (51; 51'; 123) über eine gemeinsame Wärmeversorgung, bevorzugt Nah- oder Fernwärmeversorgung erfolgen, wobei der Wärmeträgermedienrücklauf der ersten Wärmesenke der primärseitige Rücklauf (62; 62'; 136) der Warmwasserbereitung (51; 51'; 123) und der Wärmeträgermedienrücklauf der zweiten Wärmesenke der primärseitige Rücklauf (63; 137) der Heizversorgung (52; 52'; 52"; 128) sind.

3. Verfahren nach Anspruch 2, **dadurch gekennzeichnet, dass** die Soll-Temperaturen der primärseitigen Rückläufe (62; 62'; 136; 63; 137) der Warmwasserbereitung (51; 51'; 123) und der Heizversorgung (52; 52'; 52"; 128) ≤ 50 °C, bevorzugt ≤ 45 °C, insbesondere ≤ 40 °C betragen und die Soll-Temperaturdifferenz ≤ 10 K, bevorzugt ≤ 5 K, insbesondere 0 K ± ≤ 0,5 K betragen.

4. Verfahren nach Anspruch 2 oder 3, **dadurch gekennzeichnet, dass** die Heizversorgung (52"; 128) zumindest zweistufig mit mindestens einer Vorwärmung (111) und einer Nachwärmung (55) erfolgt, wobei der primärseitige Rücklauf (62) der Warmwasserbereitung (51; 123) zumindest teilweise dem primärseitigen Vorlauf (112) der Vorwärmung (111) der Heizversorgung (52"; 128) in dem ersten Betriebszustand zugeführt wird.

5. Verfahren nach einem der Ansprüche 2 bis 4, **dadurch gekennzeichnet, dass** die Warmwasserbereitung in dem Warmwasserbereiter (51; 123) zumindest zweistufig mit mindestens einer Vorwärmung (53) und einer Nachwärmung (54) erfolgt, wobei der primärseitige Rücklauf (63; 137) der Heizversorgung (52; 52'; 52"; 128) zumindest teilweise dem primärseitigen Vorlauf (68) der Vorwärmung (53) der Warmwasserbereitung (51; 123) in dem zweiten Betriebszustand zugeführt wird.

6. Vorrichtung zur Wärmenutzung, insbesondere nach dem Verfahren nach einem der vorherigen Ansprüche 1 bis 5, mit mindestens zwei Wärmesenken (51; 51'; 53, 54; 123), (52; 52'; 52"; 128) mit jeweils mindestens einem Wärmeträgermedienrücklauf (62; 62'; 136), (63; 137), wobei die Wärmesenken (51; 51'; 53, 54; 123), (52; 52'; 52"; 128) eine unterschiedliche und/oder wechselnde Charakteristik aufweisen, mit jeweils mindestens einem hindurch geführten Wärmeträgermedium, und miteinander in Bezug auf die Wärmenutzung gekoppelt sind,
**dadurch gekennzeichnet, dass** die erste Wärmesenke (51; 51'; 53, 54; 123) mit der zweiten Wärmesenke (52; 52'; 52"; 128) so gekoppelt ist, dass
- in einem ersten Betriebszustand der Wärmeträgermedienrücklauf (62; 62'; 136) der ersten Wärmesenke (51; 51'; 53, 54; 123) zumindest teilweise in die zweite Wärmesenke (52; 52'; 52"; 128) einspeisbar ist, indem der Wärmeträgermedienrücklauf (62; 62'; 136) der ersten Wärmesenke (51; 51'; 53, 54; 123) zumindest teilweise mit der zweiten Wärmesenke (52; 52'; 52"; 128) verbunden ist,
- wenn die Temperatur (70) des Wärmeträgermedienrücklaufs (62; 62'; 136) der ersten Wärmesenke (51; 51'; 53, 54; 123) oberhalb oder bei einer Soll-Temperatur des Wärmeträgermedienrücklaufs (62; 62'; 136) der ersten Wärmesenke (51; 51'; 53, 54; 123) ist,
oder,
- wenn die Temperatur (70') des Wärmeträgermedienrücklaufs der zweiten Wärmesenke (52) unterhalb oder bei einer Soll-Temperatur des Wärmeträgermedienrücklaufs der zweiten Wärmesenke (52) ist,
oder,
- wenn die Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) oberhalb oder bei einer Soll-Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) ist,
und dass
- in einem zweiten Betriebszustand der Wärmeträgermedienrücklauf (63; 137) der zweiten Wärmesenke (52; 52'; 52"; 128) zumindest teilweise in die erste Wärmesenke (51; 51'; 53, 54; 123) einspeisbar ist, indem der Wärmeträgermedienrücklauf (63; 137) der zweiten Wärmesenke (52; 52'; 52"; 128) zumindest teilweise mit der ersten Wärmesenke (51; 51'; 53, 54; 123) verbunden ist,
- wenn die Temperatur (70) des Wärmeträgermedienrücklaufs (62; 62'; 136) der ersten Wärmesenke (51; 51'; 53, 54; 123) unterhalb oder bei der Soll-Temperatur des Wärmeträgermedienrücklaufs (62; 62'; 136) der ersten Wärmesenke (51; 51'; 53, 54; 123) ist,
oder,
- wenn die Temperatur (70') des Wärmeträgermedienrücklaufs der zweiten Wärmesenke (52) oberhalb oder bei der Soll-Temperatur des Wärmeträgermedienrücklaufs der zweiten Wärmesenke (52) ist,
oder,
- wenn die Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) unterhalb oder bei der Soll-Temperaturdifferenz zwischen den Wärmeträgermedienrückläufen (62; 62'; 136), (63; 137) der ersten und zweiten Wärmesenke (51; 51'; 53, 54; 123), (52; 52'; 52"; 128) ist.

7. Vorrichtung (50; 50'; 80; 80'; 80"; 90; 100; 110; 120) nach Anspruch 6, **dadurch gekennzeichnet, dass** mindestens zwei Wärmesenken vorgesehen sind zur Heizversorgung und Warmwasserbereitung, insbesondere nach dem Verfahren nach einem der Ansprüche 2 bis 5, mit einem Heizversorger (52; 52'; 52"; 128) und einem insbesondere im Durchflussprinzip arbeitenden Warmwasserbereiter (51; 51'; 123), wobei der Wärmeträgermedienrücklauf der ersten Wärmesenke der primärseitige Rücklauf (62; 62'; 136) des Warmwasserbereiters (51; 51'; 123) und der Wärmeträgermedienrücklauf der zweiten Wärmesenke der primärseitige Rücklauf (63; 137) des Heizversorgers (52; 52'; 52"; 128) sind.

8. Vorrichtung (50; 50'; 80; 80'; 80") nach Anspruch 7, **dadurch gekennzeichnet, dass** der primärseitige Rücklauf (62; 62') des Warmwasserbereiters (51; 51') und der primärseitige Rücklauf (63) des Heizversorgers (52; 52'; 52") mit einem Primärrücklauf des Wärmeversorgers PRRL über ein gemeinsames Dreiwegeventil (64) verbunden sind, wobei das Dreiwegeventil (64) eingerichtet ist,
- den primärseitigen Rücklauf (62; 62') des Warmwasserbereiters (51; 51') gegenüber dem Primärrücklauf PRRL zumindest teilweise zu sperren,
- wenn die Temperatur (70) des primärseitigen Rücklaufs (62; 62') des Warmwasserbereiters (51; 51') oberhalb oder bei der Soll-Temperatur des primärseitigen Rücklaufs (62; 62') des Warmwasserbereiters (51; 51') ist,
oder,
- wenn die Temperatur (70') des primärseitigen Rücklaufs des Heizversorgers (52) unterhalb oder bei der Soll-Temperatur des primärseitigen Rücklaufs des Heizversorgers (52) ist,
oder,
- wenn die Temperaturdifferenz zwischen dem primärseitigen Rücklauf (62; 62') des Warmwasserbereiters (51; 51') und dem primärseitigen Rücklauf (63) des Heizversorgers (52; 52'; 52") oberhalb oder bei der Soll-Temperaturdifferenz zwischen dem primärseitigen Rücklauf (62; 62') des Warmwasserbereiters (51; 51') und dem primärseitigen Rücklauf (63) des Heizversorgers (52; 52'; 52") ist,
- und den primärseitigen Rücklauf (63) des Heizversorgers (52; 52'; 52") gegenüber dem Primärrücklauf PRRL zumindest teilweise zu sperren,
- wenn die Temperatur (70) des primärseitigen Rücklaufs (62; 62') des Warmwasserbereiters (51; 51') unterhalb oder bei der Soll-Temperatur des primärseitigen Rücklaufs (62; 62') des Warmwasserbereiters (51; 51') ist,
oder,
- wenn die Temperatur (70') des primärseitigen Rücklaufs des Heizversorgers (52) oberhalb oder bei der Soll-Temperatur des primärseitigen Rücklaufs des Heizversorgers (52) ist,
oder,
- wenn die Temperaturdifferenz zwischen dem primärseitigen Rücklauf (62; 62') des Warmwasserbereiters (51; 51') und dem primärseitigen Rücklauf (63) des Heizversorgers (52; 52'; 52") unterhalb oder bei der Soll-Temperaturdifferenz zwischen dem primärseitigen Rücklauf (62; 62') des Warmwasserbereiters (51; 51') und dem primärseitigen Rücklauf (63) des Heizversorgers (52; 52'; 52") ist.

9. Vorrichtung (50; 50'; 80; 80'; 80") nach Anspruch 8, **dadurch gekennzeichnet, dass** der primärseitige Rücklauf (63) des Heizversorgers (52; 52'; 52") über einen Bypass (67; 67') mit einem in Richtung des Heizversorgers (52; 52'; 52") sperrenden Rücksperrventil (69) mit dem primärseitigen Vorlauf (59) des Warmwasserbereiters (51; 51') verbunden ist und der primärseitige Rücklauf (62) des Warmwasserbereiters (51; 51') über einen anderen Bypass (65; 65') mit einem in Richtung des Warmwasserbereiters (51; 51') sperrenden Rücksperrventil (66) mit dem primärseitigen Vorlauf des Heizversorgers (52; 52'; 52") verbunden ist.

10. Vorrichtung (90; 100; 110; 120) nach Anspruch 7, **dadurch gekennzeichnet, dass** der primärseitige Rücklauf (62; 62'; 136) des Warmwasserbereiters (51; 123) und der primärseitige Rücklauf (63; 137) des Heizversorgers (52; 52"; 128) mit einem Primärrücklauf des Wärmeversorgers PRRL über eine gemeinsame thermische Weiche (91; 131) verbunden sind, wobei die thermische Weiche (91; 131) eingerichtet ist,
- den primärseitigen Rücklauf (62; 62'; 136) des Warmwasserbereiters (51; 123) mit dem primärseitigen Vorlauf (56) des Heizversorgers (52; 52"; 128) zumindest teilweise zu verbinden,
- wenn die Temperatur (140) des primärseitigen Rücklaufs (62; 62'; 136) des Warmwasserbereiters (51; 123) oberhalb oder bei der Soll-Temperatur des primärseitigen Rücklaufs (62; 62'; 136) des Warmwasserbereiters (51; 123) ist,
oder,
- wenn die Temperatur (141) des primärseitigen Rücklaufs (63; 137) des Heizversorgers (52; 52"; 128) unterhalb oder bei der Soll-Temperatur des primärseitigen Rücklaufs (63; 137) des Heizversorgers (52; 52"; 128) ist,
oder,
- wenn die Temperaturdifferenz zwischen dem primärseitigen Rücklauf (62; 62'; 136) des Warmwasserbereiters (51; 123) und dem primärseitigen Rücklauf (63; 137) des Heizversorgers (52; 52"; 128) oberhalb oder bei der Soll-Temperaturdifferenz zwischen dem primärseitigen Rücklauf (62; 62'; 136) des Warmwasserbereiters (51; 123) und dem primärseitigen Rücklauf (63; 137) des Heizversorgers (52; 52"; 128) ist,
- und den primärseitigen Rücklauf (63; 137) des Heizversorgers (52; 52"; 128) mit dem primärseitigen Vorlauf (59) des Warmwasserbereiters (51; 123) zumindest teilweise zu verbinden,
- wenn die Temperatur (140) des primärseitigen Rücklaufs (62; 62'; 136) des Warmwasserbereiters (51; 123) unterhalb oder bei der Soll-Temperatur des primärseitigen Rücklaufs (62; 62'; 136) des Warmwasserbereiters (51; 123) ist,
oder,
- wenn die Temperatur (141) des primärseitigen Rücklaufs (63; 137) des Heizversorgers (52; 52"; 128) oberhalb oder bei der Soll-Temperatur des primärseitigen Rücklaufs (63; 137) des Heizversorgers (52; 52"; 128) ist,
oder,
- wenn die Temperaturdifferenz zwischen dem primärseitigen Rücklauf (62; 62'; 136) des Warmwasserbereiters (51; 123) und dem primärseitigen Rücklauf (63; 137) des Heizversorgers (52; 52"; 128) unterhalb oder bei der Soll-Temperaturdifferenz zwischen dem primärseitigen Rücklauf (62; 62'; 136) des Warmwasserbereiters (51; 123) und dem primärseitigen Rücklauf (63; 137) des Heizversorgers (52; 52"; 128) ist.

11. Vorrichtung (90; 100, 110; 120) nach Anspruch 10, **dadurch gekennzeichnet, dass** die thermische Weiche (91; 131) vier Anschlüsse (92; 94; 93; 95; 132; 134; 133; 135) aufweist, wobei ein erster Anschluss (92; 132) mit dem primärseitigen Rücklauf (62; 62'; 136) des Warmwasserbereiters (51; 51'; 123), ein zweiter Anschluss (94; 134) mit dem primärseitigen Rücklauf (63; 137) des Heizversorgers (52; 52"; 128), ein dritter (93; 133) mit dem Primärrücklauf PRRL und ein vierter (95; 135) sowohl mit dem primärseitigen Vorlauf (56; 129) des Heizversorgers (52; 52"; 128) als auch mit dem primärseitigen Vorlauf (59; 126) des Warmwasserbereiters (51; 51'; 123) verbunden sind, wobei zwischen dem vierten Anschluss (95; 135) und dem primärseitigen Vorlauf (56; 129) des Heizversorgers (52; 52"; 128) ein in Richtung der thermischen Weiche (91; 131) sperrendes Rücksperrventil (66; 139) und zwischen dem vierten Anschluss (95; 135) und dem primärseitigen Vorlauf (59; 126) des Warmwasserbereiters (51; 123) ein in Richtung der thermischen Weiche (91; 131) sperrendes Rücksperrventil (69; 138) vorgesehen sind.

12. Vorrichtung (90; 100, 110; 120) nach einem der Ansprüche 10 oder 11, **dadurch gekennzeichnet, dass** die thermische Weiche (91; 131) einen Flussregler (142) aufweist, der elektronisch oder thermisch über die Temperatur (140) des primärseitigen Rücklaufs (136) des Warmwasserbereiters (51; 51'; 123) und/oder über die Temperatur (141) des primärseitigen Rücklaufs (63; 137) des Heizversorgers (52; 52"; 128) oder über die Temperaturdifferenz zwischen dem primärseitigen Rücklauf (136) des Warmwasserbereiters (51; 51'; 123) und dem primärseitigen Rücklauf (63; 137) des Heizversorgers (52; 52"; 128) eingestellt wird.

13. Vorrichtung nach Anspruch 7, **dadurch gekennzeichnet, dass** der primärseitige Rücklauf (136) des Warmwasserbereiters (123) und der primärseitige Rücklauf (137) des Heizversorgers (128) mit einem Primärrücklauf des Wärmeversorgers PRRL jeweils über ein Regelventil (143; 144) verbunden sind, wobei die Regelventile (143; 144) eingerichtet sind,
- den primärseitigen Rücklauf (136) des Warmwasserbereiters (123) gegenüber dem Primärrücklauf PRRL zumindest teilweise zu sperren,
- wenn die Temperatur (145) des primärseitigen Rücklaufs (136) des Warmwasserbereiters (123) oberhalb oder bei der Soll-Temperatur des primärseitigen Rücklaufs (136) des Warmwasserbereiters (123) ist,
oder,
- wenn die Temperatur (146) des primärseitigen Rücklaufs (137) des Heizversorgers (128) unterhalb oder bei der Soll-Temperatur des primärseitigen Rücklaufs (137) des Heizversorgers (128) ist,
oder,
- wenn die Temperaturdifferenz zwischen dem primärseitigen Rücklauf (136) des Warmwasserbereiters (123) und dem primärseitigen Rücklauf (137) des Heizversorgers (128) oberhalb oder bei der Soll-Temperaturdifferenz zwischen dem primärseitigen Rücklauf (136) des Warmwasserbereiters (123) und dem primärseitigen Rücklauf (137) des Heizversorgers (128) ist,
- und den primärseitigen Rücklauf (137) des Heizversorgers (128) gegenüber dem Primärrücklauf PRRL zumindest teilweise zu sperren,
- wenn die Temperatur (145) des primärseitigen Rücklaufs (136) des Warmwasserbereiters (123) unterhalb oder bei der Soll-Temperatur des primärseitigen Rücklaufs (136) des Warmwasserbereiters (123) ist,
oder,
- wenn die Temperatur (146) des primärseitigen Rücklaufs (137) des Heizversorgers (128) oberhalb oder bei der Soll-Temperatur des primärseitigen Rücklaufs (137) des Heizversorgers (128) ist,
oder,
- wenn die Temperaturdifferenz zwischen dem primärseitigen Rücklauf (136) des Warmwasserbereiters (123) und dem primärseitigen Rücklauf (137) des Heizversorgers (128) unterhalb oder bei der Soll-Temperaturdifferenz zwischen dem primärseitigen Rücklauf (136) des Warmwasserbereiters (123) und dem primärseitigen Rücklauf (137) des Heizversorgers (128) ist.

14. Vorrichtung (50; 50'; 100; 110; 120) nach einem der Ansprüche 7 bis 13, **dadurch gekennzeichnet, dass** der Warmwasserbereiter (51; 123) zumindest zweistufig ausgebildet ist und mindestens eine Stufe zur Vorwärmung (53) und eine Stufe zur Nachwärmung (54) aufweist und/oder der Heizversorger (52; 52'; 52"; 128) zumindest zweistufig ausgebildet ist und mindestens eine Stufe zur Vorwärmung (111) und eine Stufe zur Nachwärmung (55) aufweist.

15. Vorrichtung (120) nach einem der Ansprüche 7 bis 14, **dadurch gekennzeichnet, dass** der Warmwasserbereiter (123) zumindest zweistufig ausgebildet ist und mindestens einen Wärmeübertrager für mindestens drei Medien, insbesondere einen Viermedien-Wärmeübertrager (121) zur Vor- und Nachwärmung aufweist und/oder der Heizversorger (128) zumindest zweistufig ausgebildet ist und mindestens einen Wärmeübertrager für mindestens drei Medien, insbesondere einen Dreimedien-Wärmeübertrager (122) zur Vor- und Nachwärmung aufweist.

## Claims

1. Method for heat utilization, wherein at least two heat sinks (51; 51'; 53, 54; 123), (52; 52'; 52"; 128) with in each case at least one heat transfer media return flow (62; 62'; 136), (63; 137), which have a different and / or changing characteristic, with in each case at least one heat transfer medium guided through it, are coupled to one another with regard to the utilization of heat, **characterized in that**
- in a first operating state, the heat transfer media return flow (62, 62'; 136) of the first heat sink (51; 51'; 53, 54; 123) is at least partially fed into the second heat sink (52; 52'; 52"; 128), so that the heat transfer media return flow (62; 62'; 136) of the first heat sink (51; 51'; 53, 54; 123) is at least partially further cooled in the second heat sink (52; 52'; 52"; 128),
- if the temperature (70) of the heat transfer media return flow (62; 62'; 136) of the first heat sink (51; 51'; 53, 54; 123) is above or at the target temperature of the heat transfer media return flow (62; 62';136) of the first heat sink (51; 51'; 53, 54; 123),
or,
- if the temperature (70') of the heat transfer media return flow of the second heat sink (52) is below or at the target temperature of the heat transfer media return flow of the second heat sink (52),
or,
- if the temperature difference between the heat transfer medias return flows (62; 62'; 136), (63; 137) of the first and second heat sinks (51; 51'; 53, 54; 123), (52; 52'; 52"; 128) is above or at the target temperature difference between the heat transfer medias return flows (62; 62'; 136), (63; 137) of the first and second heat sinks (51; 51'; 53, 54; 123), (52; 52'; 52"; 128),
and **in that**
- in a second operating state, the heat transfer media return flow (63; 137) of the second heat sink (52; 52'; 52"; 128) is at least partially fed into the first heat sink (51; 51'; 53, 54; 123), so that the heat transfer media return flow (63; 137) of the second heat sink (52; 52'; 52"; 128) is at least partially further cooled in the first heat sink (51; 51'; 53, 54; 123),
- if the temperature (70) of the heat transfer media return flow (62; 62'; 136) of the first heat sink (51; 51'; 53, 54; 123) is below or at the target temperature of the heat transfer media return flow (62; 62'; 136) of the first heat sink (51; 51'; 53, 54; 123),
or,
- if the temperature (70') of the heat transfer media return flow of the second heat sink (52) is above or at the target temperature of the heat transfer media return flow of the second heat sink (52),
or,
- if the temperature difference between the heat transfer medias return flows (62; 62'; 136), (63; 137) of the first and second heat sinks (51; 51'; 53, 54; 123), (52; 52'; 52"; 128) is below or at the target temperature difference between the heat transfer medias return flows (62; 62'; 136), (63; 137) of the first and second heat sinks (51; 51'; 53, 54; 123), (52; 52'; 52"; 128).

2. Method according to claim 1, **characterized in that** at least two heat sinks are used, for heating supply (52; 52'; 52"; 128) and for hot water preparation (51; 51'; 123), in particular for hot water preparation in the throughflow principle, and in which, in particular, both, the heating supply (52; 52'; 52"; 128) and the hot water preparation (51; 51'; 123) are done via a common heat supply, preferably local or district heat supply, in which the heat transfer medium return flow of the first heat sink is the primary-side return flow (62; 62'; 136) of the hot water preparation (51; 51'; 123), and the heat transfer medium return flow of the second heat sink is the primary-side return flow (63; 137) of the heating supply (52; 52'; 52"; 128).

3. Method according to claim 2, **characterized in that** the target temperatures of the primary-side return flows (62; 62'; 136; 63; 137) of the hot water preparation (51; 51'; 123) and of the heating supply (52; 52'; 52"; 128) are ≤ 50 ° C, preferably ≤ 45 °C, in particular ≤ 40 °C and the target temperature difference is ≤ 10 K, preferably ≤ 5 K, in particular 0 K ± ≤ 0.5 K.

4. Method according to claim 2 or 3, **characterized in that** the heating supply (52"; 128) takes place in at least two stages with at least one pre-heating (111) and one post-heating (55), wherein in the first operating state the primary-side return flow (62) of the hot water preparation (51; 123) is at least partially fed to the primary-side feed flow (112) of the pre-heating (111) of the heating supply (52"; 128).

5. Method according to any of claims 2 to 4, **characterized in that** the hot water preparation in the water heater (51; 123) is done at least in two stages with at least one pre-heating (53) and one post-heating (54), in which in the second operating state, the primary-side return flow (63; 137) of the heating supply (52; 52'; 52"; 128) is at least partially fed to the primary-side feed flow (68) of the pre-heating (53) of the hot water preparation (51; 123).

6. Device for heat utilization, in particular according to the method according to any of the preceding claims 1 to 5, with at least two heat sinks (51; 51'; 53, 54; 123), (52; 52'; 52"; 128), with respectively at least one heat transfer media return flow (62; 62'; 136), (63; 137), wherein the heat sinks (51; 51'; 53, 54; 123), (52; 52'; 52"; 128) have a different and / or changing characteristics, with in each case at least one heat transfer medium conducted through, and are coupled to one another in relation to the heat utilization, **characterized in that** the first heat sink (51; 51'; 53, 54; 123) is coupled to the second heat sink (52; 52'; 52"; 128) such that
- in a first operating state, the heat transfer media return flow (62; 62'; 136) of the first heat sink (51; 51'; 53, 54; 123) can be fed at least partially into the second heat sink (52; 52'; 52"; 128), by at least partially connecting of the heat transfer media return flow (62; 62'; 136) of the first heat sink (51; 51'; 53, 54; 123) with the second heat sink (52; 52'; 52"; 128),
- if the temperature (70) of the heat transfer media return flow (62; 62'; 136) of the first heat sink (51; 51'; 53, 54; 123) is above or at a target temperature of the heat transfer media return flow (62; 62'; 136) of the first heat sink (51; 51'; 53, 54; 123),
or,
- if the temperature (70') of the heat transfer media return flow of the second heat sink (52) is below or at a target temperature of the heat transfer media return flow of the second heat sink (52),
or,
- if the temperature difference between the heat transfer medias return flows (62; 62'; 136), (63; 137) of the first and second heat sinks (51; 51'; 53, 54; 123), (52; 52'; 52"; 128) is above or at a target temperature difference between the heat transfer medias return flows (62; 62'; 136), (63; 137) of the first and second heat sinks (51; 51'; 53, 54; 123), (52; 52'; 52"; 128), and **in that**
- in a second operating state, the heat transfer media return flow (63; 137) of the second heat sink (52; 52'; 52"; 128) can be fed at least partially into the first heat sink (51; 51'; 53, 54; 123), **in that** the heat transfer media return flow (63; 137) of the second heat sink (52; 52'; 52"; 128) is at least partially connected to the first heat sink (51; 51'; 53, 54; 123),
- if the temperature (70) of the heat transfer media return flow (62; 62'; 136) of the first heat sink (51; 51'; 53, 54; 123) is below or at the target temperature of the heat transfer media return flow (62; 62'; 136) of the first heat sink (51; 51'; 53, 54; 123),
or,
- if the temperature (70') of the heat transfer media return flow of the of the second heat sink (52) is above or at the target temperature of the heat transfer media return flow of the of the second heat sink (52),
or,
- if the temperature difference between the heat transfer medias return flows (62; 62'; 136), (63; 137) of the first and second heat sinks (51; 51'; 53, 54; 123), (52; 52'; 52"; 128) is below or at the target temperature difference between the heat transfer medias return flows (62; 62'; 136), (63; 137) of the first and second heat sinks (51; 51'; 53, 54; 123), (52; 52'; 52"; 128).

7. Device (50; 50'; 80; 80'; 80"; 90; 100; 110; 120) according to claim 6, **characterized in that** at least two heat sinks are provided for heating supply and hot water preparation, in particular according to the method according to any of claims 2 to 5, with a heating supplier (52; 52'; 52"; 128) and a water heater (51; 51'; 123), operating in particular with the throughflow principle, wherein the heat transfer media return flow of the first heat sink is the primary-side return flow (62; 62'; 136) of the water heater (51; 51'; 123), and the heat transfer media return flow of the of the second heat sink is the primary-side return flow (63; 137) of the heating supplier (52; 52'; 52"; 128).

8. Device (50; 50'; 80; 80'; 80") according to claim 7, **characterized in that** the primary-side return flow (62; 62') of the water heater (51; 51') and the primary-side return flow (63) of the heating supplier (52; 52'; 52") are connected to a primary return flow of the heat supplier PRRL via a common three-way valve (64), in which the three-way valve (64) is configured,
- to at least partially shut off the primary-side return flow (62; 62') of the water heater (51; 51') with respect to the primary return flow PRRL,
- if the temperature (70) of the primary-side return flow (62; 62') of the hot water supply (51; 51') is above or at the target temperature of the primary-side return flow (62; 62') of the water heater (51; 51'),
or,
- if the temperature (70') of the primary-side return flow of the heating supplier (52) is below or at the target temperature of the primary-side return flow of the heating supplier (52),
or,
- if the temperature difference between the primary-side return flow (62; 62') of the water heater (51; 51') and the primary-side return flow (63) of the heating supplier (52; 52'; 52") is above or at the target temperature difference between the primary-side return flow (62; 62') of the water heater (51; 51') and the primary-side return flow (63) of the heating supplier (52; 52'; 52"),
- and at least partially shut off the primary-side return flow (63) of the heating supplier (52; 52'; 52") with respect to the primary return flow PRRL,
- if the temperature (70) of the primary-side return flow (62; 62') of the water heater (51; 51') is below or at the target temperature of the primary-side return flow (62; 62') of the water heater (51; 51'),
or,
- if the temperature (70') of the primary-side return flow of the heating supplier (52) is above or at the target temperature of the primary-side return flow of the heating supplier (52),
or,
- if the temperature difference between the primary-side return flow (62; 62') of the water heater (51; 51') and the primary-side return flow (63) of the heating supplier (52; 52'; 52") is below or at the target temperature difference between the primary-side return flow (62; 62') of the water heater (51; 51') and the primary-side return flow (63) of the heating supplier (52; 52'; 52").

9. Device (50; 50'; 80; 80'; 80") according to claim 8, **characterized in that** the primary-side return flow (63) of the heating supplier (52; 52'; 52") is connected via an bypass (67; 67') with a in the direction of the heating supplier (52; 52'; 52") blocking check valve (69) to the primary-side feed flow (59) of the water heater (51; 51'), and the primary-side return flow (62) of the water heater (51; 51') is connected via another bypass (65; 65') with a in the direction of the water heater (51; 51') blocking check valve (66) to the primary-side feed flow of the heating supplier (52; 52'; 52").

10. Device (90; 100; 110; 120) according to claim 7, **characterized in that** the primary-side return flow (62; 62'; 136) of the water heater (51; 123) and the primary-side return flow (63; 137) of the heating supplier (52; 52"; 128) are connected to a primary return flow of the heat supplier PRRL via a common thermal switch (91; 131), wherein the thermal switch (91; 131) is configured,
- the primary-side return flow (62; 62'; 136) of the water heater (51; 123) to the primary-side feed flow (56) of the heating supplier (52; 52"; 128) at least partially connect,
- if the temperature (140) of the primary-side return flow (62; 62'; 136) of the water heater (51; 123) is above or at the target temperature of the primary-side return flow (62; 62'; 136) of the water heater (51; 123),
or,
- if the temperature (141) of the primary-side return flow (63; 137) of the heating supplier (52; 52"; 128) is below or at the target temperature of the primary-side return flow (63; 137) of the heating supplier (52; 52"; 128),
or,
- if the temperature difference between the primary-side return flow (62; 62'; 136) of the water heater (51; 123) and the primary-side return flow (63; 137) of the heating supplier (52; 52"; 128) is above or at the target temperature difference between the primary-side return flow (62; 62'; 136) of the water heater (51; 123) and the primary-side return flow (63; 137) of the heating supplier (52; 52"; 128),
- and the primary-side return flow (63; 137) of the heating supplier (52; 52"; 128) to the primary-side feed flow (59) of the water heater (51; 123) at least partially connect,
- if the temperature (140) of the primary-side return flow (62; 62'; 136) of the water heater (51; 123) is below or at the, target temperature of the primary-side return flow (62; 62'; 136) of the water heater (51; 123),
or,
- if the temperature (141) of the primary-side return flow (63; 137) of the heating supplier (52; 52"; 128) is above or at the target temperature of the primary-side return flow (63; 137) of the heating supplier (52; 52"; 128),
or,
- if the temperature difference between the primary-side return flow (62; 62'; 136) of the water heater (51; 123) and the primary-side return flow (63; 137) of the heating supplier (52; 52"; 128) is below or at the target temperature difference between the primary-side return flow (62; 62'; 136) of the water heater (51; 123) and the primary-side return flow (63; 137) of the heating supplier (52; 52"; 128).

11. Device (90; 100; 110; 120) according to claim 10, **characterized in that** the thermal switch (91; 131) has four ports (92; 94; 93; 95; 132; 134; 133; 135), wherein a first port (92; 132) is connected to the primary-side return flow (62; 62'; 136) of the water heater (51; 51'; 123), a second port (94; 134) is connected to the primary-side return flow (63; 137) of the heating supplier (52; 52"; 128), a third (93; 133) is connected to the primary return flow PRRL and a fourth (95; 135) is connected both to the primary-side feed flow (56; 129) of the heat supplier (52; 52"; 128) and the primary-side feed flow (59; 126) of the water heater (51; 51'; 123), in which between the fourth port (95; 135) and the primary-side feed flow (56; 129) of the heating supplier (52; 52"; 128) is a check valve (66; 139) which blocks in the direction of the thermal switch (91; 131), and between the fourth port (95; 135) and the primary-side feed flow (59; 126) of the water heater (51; 123) is a check valve (69; 138) which blocks in the direction of the thermal switch (91; 131).

12. Device (90; 100; 110; 120) according to any of claims 10 or 11, **characterized in that** the thermal switch (91; 131) has a flow regulator (142) which is set electronically or thermally via the temperature (140) of the primary-side return flow (136) of the water heater (51; 51'; 123) and / or via the temperature (141) of the primary-side return flow (63; 137) of the heating supplier (52; 52"; 128) or via the temperature difference between the primary-side return flow (136) of the water heater (51; 51'; 123) and the primary-side return flow (63; 137) of the heating supplier (52; 52"; 128).

13. Device according to claim 7, **characterized in that** the primary-side return flow (136) of the water heater (123), and the primary-side return flow (137) of the heating supplier (128) each are connected to a primary-side return flow of the heat supplier PRRL via a regulating valve (143; 144), wherein the regulating valves (143; 144) are configured,
- to at least partially shut off the primary-side return flow (136) of the water heater (123) with respect the primary return flow PRRL,
- if the temperature (145) of the primary-side return flow (136) of the water heater (123) is above or at the target temperature of the primary-side return flow (136) of the water heater (123),
or,
- if the temperature (146) of the primary-side return flow (137) of the heating supplier (128) is below or at the target temperature of the primary-side return flow (137) of the heating supplier (128),
or,
- if the temperature difference between the primary-side return flow (136) of the water heater (123) and the primary-side return flow (137) of the heating supplier (128) is above or at the target temperature difference between the primary-side return flow (136) of the water heater (123) and the primary-side return flow (137) of the heating supplier (128),
- and at least partially shut off the primary-side return flow (137) of the heating supplier (128) with respect to the primary return flow PRRL,
- if the temperature (145) of the primary-side return flow (136) of the water heater (123) is below or at the target temperature of the primary-side return flow (136) of the water heater (123),
or,
- if the temperature (146) of the primary-side return flow (137) of the heating supplier (128) is above or at the target temperature of the primary-side return flow (137) of the heating supplier (128),
or,
- if the temperature difference between the primary-side return flow (136) of the water heater (123) and the primary-side return flow (137) of the heating supplier (128) is below or at the target temperature difference between the primary-side return flow (136) of the water heater (123) and the primary-side return flow (137) of the heating supplier (128).

14. Device (50; 50'; 100; 110; 120) according to any of claims 7 to 13, **characterized in that** the water heater (51; 123) is formed at least in two stages and has at least one stage for pre-heating (53) and one stage for post-heating (54), and / or the heating supplier (52; 52'; 52"; 128) is formed at least in two stages and at least one stage for pre-heating (111) and one stage for post-heating (55).

15. Device (120) according to any of claims 7 to 14, **characterized in that** the water heater (123) is formed at least two stages and has at least one heat exchanger for at least three media, in particular a four-media heat exchanger (121) for pre-heating and post-heating and / or the heating supplier (128) is formed at least two stages and has at least one heat exchanger for at least three media, in particular a three-media heat exchanger (122) for pre-heating and post-heating.

## Revendications

1. Procédé pour l'utilisation de chaleur, dans lequel au moins deux dissipateurs thermiques (51; 51'; 53, 54; 123), (52; 52'; 52"; 128) présentent chacun au moins un retour de fluide caloporteur (62; 62'; 136), (63 ; 137) ayant des caractéristiques différentes et/ou variables, chacun ayant au moins un fluide caloporteur traversant, étant couplé entre eux pour l'utilisation de chaleur, **caractérisé en ce que**
- dans un premier état de fonctionnement, le retour de fluide caloporteur (62; 62'; 136) du premier dissipateur thermique (51; 51'; 53, 54; 123) est amené au moins partiellement dans le deuxième dissipateur thermique (52; 52'; 52"; 128) de telle sorte que le retour de fluide caloporteur (62; 62'; 136) du premier dissipateur thermique (51; 51'; 53, 54; 123) est refroidi au moins partiellement en outre au second dissipateur thermique ,
- lorsque la température (70) du retour de fluide caloporteur (62; 62'; 136) du premier dissipateur thermique (51; 51'; 53, 54; 123) est supérieure ou à une température cible du retour de fluide caloporteur (62; 62'; 136) du premier dissipateur thermique (51; 51'; 53, 54; 123),
ou,
- lorsque la température (70') du retour du fluide caloporteur du deuxième dissipateur thermique (52) est inférieure ou à une température cible du retour du fluide caloporteur du deuxième dissipateur thermique (52),
ou,
- lorsque la différence de température du retour du caloporteur (62; 62'; 136), (63; 137) des premier et second dissipateurs thermique (51; 51'; 53, 54; 123), (52; 52'; 52"; 128) est supérieure ou à une différence de température cible du retours de fluids caloporteur (62; 62'; 136), (63; 137) des premier et second dissipateurs thermique (51; 51'; 53, 54; 123), (52; 52'; 52"; 128),
et que
- dans un deuxième état de fonctionnement, le retour de fluide caloporteur (63; 137) du deuxième dissipateur thermique (52; 52'; 52"; 128) est amené au moins partiellement dans le premier dissipateur thermique (51; 51'; 53, 54; 123) de telle sorte que le retour de fluide caloporteur (63; 137) du deuxième dissipateur thermique (52; 52'; 52"; 128) soit refroidi au moins en partie encore au premier dissipateur thermique (51; 51'; 53, 54; 123),
- lorsque la température (70) du retour de fluide caloporteur (62; 62'; 136) du premier dissipateur thermique (51; 51'; 53, 54; 123) est inférieure ou à une la température cible du retour de fluide caloporteur (62 ; 62' ; 136) du premier dissipateur (51; 51'; 53, 54; 123),
ou,
- lorsque la température (70') du retour du fluide caloporteur du deuxième dissipateur thermique (52) est supérieure ou à une la température cible du retour du fluide caloporteur du deuxième dissipateur thermique (52),
ou,
- lorsque la différence de température du retour du caloporteur (62; 62'; 136), (63; 137) des premier et second dissipateurs thermique (51; 51'; 53, 54; 123), (52; 52'; 52"; 128) est inférieure ou à une la différence de température cible du retours de fluids caloporteur (62; 62'; 136), (63; 137) des premier et second dissipateurs thermique (51; 51'; 53, 54; 123), (52; 52'; 52"; 128).

2. Procédé selon la revendication 1, **caractérisé en ce que** moins deux dissipateurs thermiques sont utilisés pour l'alimentation en chauffage (52; 52'; 52"; 128) et la préparation d'eau chaude (51; 51'; 123), en particulier la préparation d'eau chaude en écoulement continu, et **en ce que** l'alimentation en chauffage (52; 52'; 52"; 128) et la préparation en eau chaude (51; 51'; 123) sont utilisées par l'intermédiaire d'une alimentation de chaleur commune, de préférence d'une alimentation de chauffage local ou à distance, le retour de fluide caloporteur du premier dissipateur thermique étant le retour côté primaire (62; 62'; 136) de la préparation d'eau chaude (51; 51'; 123) et le retour de fluide caloporteur du second dissipateur thermique étant le retour côté primaire (63; 137) de fournisseur de chauffage (52; 52'; 52"; 128).

3. Procédé selon la revendication 2, **caractérisé en ce que** les températures cibles des retours côté primaire (62; 62'; 136; 63; 137) de la préparation d'eau chaude (51; 51'; 123) et de fournisseur de chauffage (52; 52'; 52"; 128) sont ≤ 50 °C, de préférence ≤ 45 °C, notamment ≤ 40 °C et la différence de température cible ≤ 10 K, de préférence ≤ 5 K, en particulier 0 K±≤ 0,5 K.

4. Procédé selon la revendication 2 ou 3, **caractérisé en ce que** l'alimentation en chauffage (52"; 128) s'effectue au moins en deux étapes avec au moins un préchauffage (111) et un post-chauffage (55), le retour côté primaire (62) de la préparation d'eau chaude (51; 123) étant amené au moins partiellement au flux côté primaire (112) du préchauffage (111) de l'alimentation en chauffage (52"; 128) dans le premier état de service.

5. Procédé selon l'une des revendications 2 à 4, **caractérisé en ce que** la préparation d'eau chaude dans le chauffe-eau (51; 123) s'effectue au moins en deux étapes avec au moins un préchauffage (53) et un post-chauffage (54), le retour côté primaire (63; 137) de fournisseur de chauffage (52; 52'; 52"; 128) étant amené au moins partiellement, au flux côté primaire (68) de la préparation (51; 123) de l'eau chaude au préchauffage dans le second état de fonctionnement.

6. Dispositif d'utilisation de chaleur, notamment selon le procédé selon l'une des revendications 1 à 5 précédentes, comportant au moins deux dissipateurs thermiques (51; 51'; 53, 54; 123), (52; 52'; 52"; 128) ayant chacun au moins un retour (62; 62'; 136), (63; 137), les dissipateurs thermiques (51; 51'; 53, 54; 123), (52; 52'; 52"; 128) ayant des caractéristiques différentes et/ou variables, chacun ayant au moins un fluide caloporteur qui le traverse, et étant couplé les uns aux autres en ce qui concerne leur utilisation thermique,
**caractérisé en ce que** le premier dissipateur thermique (51; 51'; 53, 54; 123) est couplé au second dissipateur thermique (52; 52'; 52"; 128) de sorte que
- dans un premier état de fonctionnement, le retour de fluide caloporteur (62; 62'; 136) du premier dissipateur thermique (51; 51'; 53, 54; 123) peut être amené au moins partiellement guidable dans le deuxième dissipateur thermique (52; 52'; 52"; 128), le retour de fluide caloporteur (62; 62'; 136) du premier dissipateur (51; 51'; 53, 54; 123) étant au moins partiellement relié au deuxième dissipateur (52; 52'; 52"; 128),
- lorsque la température (70) du retour de fluide caloporteur (62; 62'; 136) du premier dissipateur thermique (51; 51'; 53, 54; 123) est supérieure ou à une température cible du retour de fluide caloporteur (62; 62'; 136) du premier dissipateur thermique (51; 51' ; 53, 54; 123),
ou,
- lorsque la température (70') du retour du fluide caloporteur du deuxième dissipateur thermique (52) est inférieure ou à une température cible du retour du fluide caloporteur du deuxième dissipateur (52),
ou,
- lorsque la différence la température du retour du fluide caloporteur (62; 62'; 136), (63; 137) des premier et second dissipateurs (51; 51'; 53, 54; 123), (52; 52'; 52"; 128) est supérieure ou à une la différence la température dun retour (62; 62'; 136), (63; 137) des premier et second caloporteur (51; 51'; 53, 54; 123), (52 ; 52'; 52"; 128),
et que
- dans un deuxième état de fonctionnement, le retour de fluide caloporteur (63; 137) du deuxième dissipateur thermique (52; 52'; 52"; 128) peut être amené au moins partiellement guidable dans le premier dissipateur thermique (51 ; 51'; 53, 54; 123), le retour de fluide caloporteur (63; 137) du deuxième dissipateur (52; 52'; 52"; 128) étant au moins partiellement relié au premier dissipateur (51; 51'; 53, 54; 123),
- lorsque la température (70) du retour de fluide caloporteur (62; 62'; 136) du premier dissipateur thermique (51; 51'; 53, 54; 123) est inférieure ou à une la température cible du retour de fluide caloporteur (62; 62'; 136) du premier dissipateur (51; 51'; 53, 54; 123),
ou,
- lorsque la température (70') du retour du fluide caloporteur du deuxième dissipateur (52) est supérieure ou à une la température cible du retour du fluide caloporteur du deuxième dissipateur (52),
ou,
- lorsque la différence la température du retour du fluide caloporteur (62; 62'; 136), (63; 137) des premier et second dissipateurs (51; 51'; 53, 54; 123), (52; 52'; 52'; 52"; 128) est inférieure ou à une la différence la température dun retours (62; 62'; 136), (63; 137) des premier et second caloporteur (51; 51'; 53, 54 ; 123), (52; 52'; 52"; 128).

7. Dispositif (50; 50'; 80; 80'; 80"; 90; 100; 110; 120) selon la revendication 6, **caractérisé en ce qu'au** moins deux dissipateurs thermiques sont prévus pour l'alimentation de chauffage et la préparation d'eau chaude, en particulier selon le procédé selon l'une des revendications 2 à 5, avec un fournisseurs de chauffage (52; 52'; 52"; 128) et un chauffe-eau (51; 51'; 123), le retour de fluide caloporteur du premier dissipateur thermique étant le retour côté primaire (62; 62'; 136) du chauffe-eau (51; 51'; 123) et le retour de fluide caloporteur du deuxième dissipateur thermique étant le retour côté primaire (63; 137) du fournisseur de chauffage (52; 52'; 52"; 128).

8. Dispositif (50; 50'; 80; 80'; 80") selon la revendication 7, **caractérisé en ce que** le retour côté primaire (62; 62') du chauffe-eau (51; 51') et le retour côté primaire (63) du fournisseur de chauffage (52; 52'; 52") sont reliés par une vanne trois voies commune (64) à un retour primaire du fournisseur de chauffage PRRL, la vanne trois voies (64) étant montée,
- pour bloquer au moins partiellement le retour côté primaire (62; 62') du chauffe-eau (51; 51') par rapport au retour primaire PRRL,
- lorsque la température (70) du retour côté primaire (62; 62') du chauffe-eau (51; 51') est supérieure ou à une la température cible du retour côté primaire (62; 62') du chauffe-eau (51; 51'),
ou,
- lorsque la température (70') du retour latéral primaire du fournisseur de chauffage (52) est inférieure ou à une la température cible du retour latéral primaire du fournisseur de chauffage (52),
ou,
- lorsque la différence de température entre le retour côté primaire (62; 62') du chauffe-eau (51; 51') et le retour côté primaire (63) de fournisseur de chauffage (52; 52'; 52") est supérieure ou à une la différence de température cible entre le retour côté primaire (62; 62') du chauffe-eau (51; 51') et le retour côté primaire (63) de l'alimentation de fournisseur de chauffage (52; 52'; 52"),
- et bloquant au moins partiellement le retour côté primaire (63) de fournisseur de chauffage (52; 52'; 52") par rapport au retour primaire PRRL,
- lorsque la température (70) du retour côté primaire (62; 62') du chauffe-eau (51; 51') est inférieure ou à une la température cible du retour côté primaire (62; 62') du chauffe-eau (51; 51'),
ou,
- lorsque la température (70') du retour latéral primaire du fournisseur de chauffage (52) est supérieure ou à une la température cible du retour latéral primaire du fournisseur de chauffage (52),
ou,
- lorsque la différence de température entre le retour côté primaire (62; 62') du chauffe-eau (51; 51') et le retour côté primaire (63) du fournisseur de chauffage (52; 52'; 52") est inférieure ou à une la différence de température cible entre le retour côté primaire (62; 62') du chauffe-eau (51; 51') et le retour côté primaire (63) du fournisseur de chauffage (52; 52'; 52").

9. Dispositif (50; 50'; 80; 80'; 80") selon la revendication 8, **caractérisé en ce que** le retour côté primaire (63) du fournisseur de chauffage (52; 52'; 52") est relié par un by-pass (67; 67') à un clapet anti-retour (69) avec le départ côté primaire (59) du chauffe-eau (51; 51'), qui se verrouille dans la direction du fournisseur de chauffage (52; 52'; 52"), et le retour côté primaire (62) du chauffe-eau (51; 51') est relié par un autre by-pass (65; 65') avec un clapet anti-retour (66) au retour côté primaire de fournisseur de chauffage (52; 52'; 52"), qui se verrouille dans la direction du chauffe-eau (51; 51').

10. Dispositif (90; 100; 110; 120) selon la revendication 7, **caractérisé en ce que** le retour côté primaire (62; 62'; 136) du chauffe-eau (51; 123) et le retour côté primaire (63; 137) du fournisseur de chauffage (52; 52"; 128) sont reliés à un retour primaire du fournisseur de chauffage PRRL via un commutateur thermique commun (91; 131), le commutateur thermique (91; 131) étant installé,
- le raccordement au moins partiel du retour côté primaire (62; 62'; 136) du chauffe-eau (51; 123) au retour côté primaire (56) de fournisseur de chauffage (52; 52"; 128),
- lorsque la température (140) du retour côté primaire (62; 62'; 136) du chauffe-eau (51; 123) est supérieure ou à une la température cible du retour côté primaire (62; 62'; 136) du chauffe-eau (51; 123),
ou,
- lorsque la température (141) du retour côté primaire (63; 137) de fournisseur de chauffage (52; 52"; 128) est inférieure ou à une la température cible du retour côté primaire (63; 137) fournisseur de chauffage (52; 52"; 128),
ou,
- lorsque la différence de température entre le retour côté primaire (62; 62'; 136) du chauffe-eau (51; 123) et le retour côté primaire (63; 137) de fournisseur de chauffage (52; 52"; 52"; 128) est supérieure ou à une la différence de température cible entre le retour côté primaire (62; 62'; 136) du chauffe-eau (51; 123) et le retour côté primaire (63; 137) de fournisseur de chauffage (52; 52"; 128),
- et à raccorder au moins partiellement le retour côté primaire (63; 137) de fournisseur de chauffage (52; 52"; 128) au départ côté primaire (59) du chauffe-eau (51; 123),
- lorsque la température (140) du retour côté primaire (62; 62'; 136) du chauffe-eau (51; 123) est inférieure ou à une la température cible du retour côté primaire (62; 62'; 136) du chauffe-eau (51; 123),
ou,
- lorsque la température (141) du retour côté primaire (63; 137) de fournisseur de chauffage (52; 52"; 128) est supérieure ou à une la température cible du retour côté primaire (63; 137) de fournisseur de chauffage (52; 52"; 128),
ou,
- lorsque la différence de température entre le retour côté primaire (62; 62'; 136) du chauffe-eau (51; 123) et le retour côté primaire (63; 137) de fournisseur de chauffage (52; 52"; 128) est inférieure ou à une la différence de température cible entre le retour côté primaire (62; 62'; 136) du chauffe-eau (51; 123) et le retour côté primaire (63; 137) de fournisseur de chauffage (52; 52"; 128).

11. Dispositif (90; 100, 110; 120) selon la revendication 10, **caractérisé en ce que** le commutateur thermique (91 ; 131) comporte quatre connexions (92; 94; 93; 95; 132; 134; 133; 135), une première connexion (92; 132) avec le retour côté primaire (62; 62'; 136) du chauffe-eau (51; 51'; 123), une seconde connexion (94 ; 134) sont raccordés au retour côté primaire (63 ; 137) de fournisseur de chauffage (52; 52"; 128), un troisième (93; 133) est raccordé au retour côté primaire PRRL et un quatrième (95; 135) est raccordé au flux côté primaire (56; 129) de fournisseur de chauffage (52; 52"; 128) et au flux côté primaire (59; 126) du chauffe-eau (51; 51'; 123), là où entre le quatrième raccord (95; 135) et la conduite d'alimentation côté primaire (56; 129) du fournisseur de chauffage (52; 52"; 128) est prévu un clapet anti-retour (66; 139) bloquant en direction du commutateur thermique (91; 131), et entre le quatrième raccord (95; 135) et la conduite d'alimentation côté primaire (59; 126) du chauffe-eau (51; 123) est prévue une soupape anti-retour (66; 139) bloquant en direction du commutateur thermique (91; 131).

12. Dispositif (90; 100, 110; 120) selon l'une des revendications 10 ou 11, **caractérisé en ce que** le commutateur thermique (91 ; 131) comporte un régulateur de débit (142) qui est commandé électroniquement ou thermiquement par la température (140) du retour (136) côté primaire du chauffe-eau (51 ; 51'; 123) et/ou par la température (141) du retour côté primaire (63; 137) du fournisseur de chauffage (52; 52"; 128) ou par la différence de température entre le retour côté primaire (136) du chauffe-eau (51; 51'; 123) et le retour côté primaire (63; 137) du fournisseur de chauffage (52; 52"; 128).

13. Dispositif selon la revendication 7, **caractérisé en ce que** le retour côté primaire (136) du chauffe-eau (123) et le retour côté primaire (137) du fournisseur de chauffage (128) sont reliés chacun à un retour primaire du fournisseur de chaleur PRRL par une vanne de régulation (143; 144), les vannes de régulation (143; 144) étant montées,
- pour bloquer au moins partiellement le retour côté primaire (136) du chauffe-eau (123) par rapport au retour primaire PRRL,
- lorsque la température (145) du retour côté primaire (136) du chauffe-eau (123) est supérieure ou à une la température cible du retour côté primaire (136) du chauffe-eau (123), ou,
- lorsque la température (146) du retour latéral primaire (137) du fournisseur de chauffage (128) est inférieure ou à une la température cible du retour latéral primaire (137) du fournisseur de chauffage (128),
ou,
- lorsque la différence de température entre le retour côté primaire (136) du chauffe-eau (123) et le retour côté primaire (137) du fournisseur de chauffage (128) est supérieure ou à une la différence de température cible entre le retour côté primaire (136) du chauffe-eau (123) et le retour côté primaire (137) du fournisseur de chauffage (128),
- et bloquer au moins partiellement le retour côté primaire (137) du fournisseur de chauffage (128) par rapport au retour primaire PRRL,
- lorsque la température (145) du retour côté primaire (136) du chauffe-eau (123) est inférieure ou à une la température cible du retour côté primaire (136) du chauffe-eau (123), ou,
- lorsque la température (146) du retour latéral primaire (137) du fournisseur de chauffage (128) est supérieure ou à une la température cible du retour latéral primaire (137) du fournisseur de chauffage (128),
ou,
- lorsque la différence de température entre le retour côté primaire (136) du chauffe-eau (123) et le retour côté primaire (137) du fournisseur de chauffage (128) est inférieure ou à une la différence de température cible entre le retour côté primaire (136) du chauffe-eau (123) et le retour côté primaire (137) du fournisseur de chauffage (128).

14. Dispositif (50; 50'; 100; 110; 120) selon l'une des revendications 7 à 13, **caractérisé en ce que** le chauffe-eau (51; 123) est conçu en au moins deux étages et présente au moins un étage pour le préchauffage (53) et un étage pour le post-chauffage (54) et/ou le fournisseur de chauffage (52; 52'; 52"; 128) est conçu au moins deux étages et présente au moins un étage pour le préchauffage (111) et un étage pour le post-chauffage (55).

15. Dispositif (120) selon l'une des revendications 7 à 14, **caractérisé en ce que** le chauffe-eau (123) est réalisé au moins en deux étapes et présente au moins un échangeur de chaleur pour au moins trois milieux, en particulier un échangeur de chaleur à quatre milieux (121) pour le préchauffage et le post-chauffage et/ou le fournisseur de chauffage (128) est réalisé au moins en deux étapes et présente au moins un échangeur de chaleur pour au moins trois milieux, en particulier un échangeur de chaleur (122) en trois milieux pour le préchauffage et le post-chauffage.
